# EUROPEAN PATENT APPLICATION

(11) **EP 4 746 519 A1**
(43) Date of publication of application: **20.05.2026**
(21) Application number: 24864578.0
(22) Date of filing: 09.09.2024
(51) Int. Cl.: H04W 36/00

(54) **COMMUNICATION METHOD AND COMMUNICATION APPARATUS**

(30) Priority: 12.09.2023 CN 202311175536
(71) Applicant: Huawei Technologies Co., Ltd., Shenzhen, Guangdong 518129 (CN)
(72) Inventor: WANG, Yu, Shenzhen, Guangdong 518129 (CN); ZHONG, Yaping, Shenzhen, Guangdong 518129 (CN); MENG, Xian, Shenzhen, Guangdong 518129 (CN); YU, Chuchu, Shenzhen, Guangdong 518129 (CN); QIN, Dali, Shenzhen, Guangdong 518129 (CN); ZHAO, Feiran, Shenzhen, Guangdong 518129 (CN)
(74) Representative: Thun, Clemens
(86) International application number: PCT/CN2024/117781
(87) International publication number: WO 2025/055858

(57) **Abstract**

This application provides a communication method and a communication apparatus. The method includes: obtaining first information of at least one candidate network device, where the first information of the candidate network device includes information about a transmission path between a first network device and the candidate network device; and performing at least one of the following based on the first information: sending second information to at least one second network device, where the second information indicates that the at least one second network device is barred from serving a terminal device, the at least one second network device belongs to the at least one candidate network device, and the first network device is a serving network device of the terminal device; sending third information to the terminal device, to indicate whether the terminal device is allowed to switch to the at least one second network device; or sending a first request message to a core network device, to request to send data of the terminal device to the at least one second network device. In this way, mobility interruption time and handover overheads of the terminal device are reduced.

## Description

This application claims priority to Chinese Patent Application No. 202311175536.2, filed with the China National Intellectual Property Administration on September 12, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A non-terrestrial communication network (non-terrestrial network, NTN), for example, a satellite communication network, has significant advantages such as global coverage, long-distance transmission, flexible networking, convenient deployment, and being free from geographical limitations, and has been widely used in a plurality of fields such as maritime communication, positioning and navigation, disaster relief, scientific experiments, video broadcasting, and earth observation.

Usually, cell handover and cell reselection of a terminal device in new radio (new radio, NR) are mainly triggered by movement of the terminal device, and a transmission path between a source base station and a target base station is fixed and has a short propagation delay. However, in an NTN communication system (for example, an LEO satellite network), because a dynamic topology is present between a source base station and a target base station, a transmission path between the source base station and the target base station is not fixed and has a long propagation delay, leading to low operation efficiency of a terminal device in a mode in which handover/reselection is mainly triggered by movement of a network device (for example, a satellite).

### SUMMARY

This application provides a communication method and a communication apparatus, to reduce mobility interruption time and handover overheads of a terminal device, and improve operation efficiency of the terminal device in a mode in which handover/reselection is mainly triggered by movement of a network device.

According to a first aspect, a communication method is provided. The method may be performed by a first network device. The first network device herein may be the first network device itself, or may be a processor, a module, a chip, a chip system, or the like that is in the first network device and that implements the method. This is not limited in this application. The method includes:

The first network device obtains first information of at least one candidate network device, where first information of each candidate network device includes information about a transmission path between the first network device and the candidate network device. The first network device performs at least one of the following based on the first information: sending second information to at least one second network device, where the second information indicates that the at least one second network device is barred from serving a terminal device, the at least one second network device belongs to the at least one candidate network device, and the first network device is a serving network device of the terminal device; or sending third information to the terminal device, where the third information indicates whether the terminal device is allowed to switch to the at least one second network device; or sending a first request message to a core network device, where the first request message is used to request the core network device to send uplink data of the terminal device to the at least one second network device.

First information of each candidate network device includes information about a transmission path between the first network device and the candidate network device.

Specifically, the information about the transmission path between the first network device and the candidate network device includes one or more of the following: a specific transmission path between the first network device and the candidate network device, a hop count included in the transmission path, a delay of the transmission path, a distance of the transmission path, weight information corresponding to the transmission path, an orbit height of the candidate network device, a type of the candidate network device, an orbit type of the candidate network device, and the like. The weight information may correspond to a transmission cost, a transmission rate, a transmission priority, or the like of the path.

It should be understood that the first request message may be used to request the core network device to send the uplink data and/or downlink data of the terminal device to the at least one second network device.

It should be understood that a specific manner of obtaining the at least one candidate network device by the first network device is not limited in this embodiment of this application.

In a possible implementation, a network device #1 (an example of the first network device) sends a request message #1 to a network device #2 (an example of the candidate network device), and correspondingly, the network device #2 receives the request message #1.

The request message #1 may be used to request first information of the network device #2, or the request message #1 may be used to request the network device #2 to confirm first information of the network device #2. This is not limited in this embodiment of this application.

It should be understood that a terrestrial station node can also serve as a transit node between a source satellite node and a target satellite node of handover.

It should be understood that, in different time periods, a transmission path between the source satellite node and the target satellite node also changes, and the first information of the candidate network device is also updated correspondingly.

It should be understood that an interaction interface between the first network device and the candidate network device is not limited in this embodiment of this application.

In an example, an NGAP interface from a base station to a core network is reused as an interaction interface between the first network device and the candidate network device.

In another example, an X2AP interface, an XnAP interface, or the like between base stations may be reused as an interaction interface between the first network device and the candidate network device.

According to the foregoing solution, the first network device can exchange related information (namely, the first information) of a transmission path with the at least one candidate network device, and determine, based on the first information of each candidate network device, whether to indicate the terminal device to switch to the candidate network device, to prevent the terminal device from accessing an inappropriate candidate network device (namely, the second network device). This can reduce mobility interruption time of the terminal device, and improve operation efficiency of the terminal device in a mode in which handover/reselection is mainly triggered by movement of a network device.

With reference to the first aspect, in some implementations of the first aspect, sending the second information to the at least one second network device based on the first information or sending the third information to the terminal device further includes: determining the at least one second network device based on the first information and a first condition.

It should be understood that, in this embodiment of this application, determining whether the first information of the candidate network device meets the first condition is related to a parameter included in the first information.

With reference to the first aspect, in some implementations of the first aspect, the first information of the candidate network device includes a distance of the transmission path between the first network device and the candidate network device, and the first condition includes: A distance of a transmission path between the second network device and the first network device is greater than a first threshold; and/or the distance of the transmission path between the second network device and the first network device is ranked top M among distances of transmission paths between the first network device and the at least one candidate network device, where M is a positive integer.

With reference to the first aspect, in some implementations of the first aspect, the first information of the candidate network device includes a hop count of the transmission path between the first network device and the candidate network device, and the first condition includes: A hop count of a transmission path between the second network device and the first network device is greater than or equal to a second threshold; and/or the hop count of the transmission path between the second network device and the first network device is ranked top N among distances of transmission paths between the first network device and the at least one candidate network device, where N is a positive integer.

With reference to the first aspect, in some implementations of the first aspect, the first information of the candidate network device includes a delay of the transmission path between the first network device and the candidate network device, and the first condition includes: A delay of a transmission path between the second network device and the first network device is greater than a third threshold; and/or the delay of the transmission path between the second network device and the first network device is ranked top K among distances of transmission paths between the first network device and the at least one candidate network device, where K is a positive integer.

With reference to the first aspect, in some implementations of the first aspect, the first information of the candidate network device includes a weight of the transmission path between the first network device and the candidate network device, and the first condition includes: A weight of a transmission path between the second network device and the first network device is greater than a fifth threshold; and/or the weight of the transmission path between the second network device and the first network device is ranked top L among weights of transmission paths between the first network device and the at least one candidate network device, where L is a positive integer.

According to the foregoing solution, the first network device can determine, based on the first condition, a second network device with long mobility interruption time, and indicate to bar the second network device from serving the terminal device, or indicate whether the terminal device can access the second network device, to prevent the second network device from accessing an inappropriate second network device, and shorten mobility interruption time.

With reference to the first aspect, in some implementations of the first aspect, the second information includes an identifier of a first time period and an identifier of a first area, the second information indicates the second network device to stop sending a measurement reference signal to the first area within the first time period, and the first area is an area in which the terminal device is located.

It should be understood that the measurement reference signal may be one or more of the following: a synchronization signal and physical broadcast channel block (synchronization signal and PBCH block, SSB), a channel state information reference signal (channel state information reference signal, CSI-RS), a tracking reference signal (Tracking Reference Signal, TRS), and the like.

With reference to the first aspect, in some implementations of the first aspect, the second information includes an identifier of a first time period and an identifier of a first area, the second information indicates the second network device to send eighth information to the first area within the first time period, the eighth information indicates that access of the terminal device is barred, and the first area is an area in which the terminal device is located.

By way of example rather than limitation, the eighth information is included in a cell barred/restricted (Cell Barred) indication message.

According to the foregoing solution, after determining a second network device that is to cause long mobility interruption time, the first network device sends the second information to the second network device, to request the second network device to stop sending a handover-related measurement signal to the area in which the terminal device is located, or request the second network device to send a message related to access barring to the area in which the terminal device is located, to prevent the terminal device from performing measurement on and accessing an inappropriate second network device, and shorten mobility interruption time.

With reference to the first aspect, in some implementations of the first aspect, the third information includes an identifier of a first periodicity, the third information indicates the terminal device to perform signal measurement based on the first periodicity, the first periodicity does not overlap a second periodicity, and the second periodicity is a transmission periodicity of a measurement reference signal of the second network device.

It should be understood that the first periodicity and the second periodicity may be understood as time windows configured based on SSB-based measurement timing configuration (SSB-based measurement timing configuration, SMTC) information.

According to the foregoing solution, the first network device can send the third information to the terminal device, to indicate the terminal device to perform signal measurement based on the first periodicity that does not overlap the signal transmission periodicity of the second network device, to prevent the terminal device from performing measurement on and accessing an inappropriate second network device, and shorten mobility interruption time.

With reference to the first aspect, in some implementations of the first aspect, the information about the transmission path between the first network device and the candidate network device includes one or more of the following: an orbit height of the candidate network device, a type of the candidate network device, and an orbit type of the candidate network device.

With reference to the first aspect, in some implementations of the first aspect, the third information includes a priority of the at least one candidate network device, the third information indicates the terminal device to perform signal measurement based on the priority of the at least one candidate network, and a priority of each candidate network device is determined based on at least one of the following: orbit types of the first network device and the candidate network device, a distance between the first network device and the candidate network device, and a type of a link between the first network device and the candidate network device.

Specifically, the first network device indicates the terminal device to perform signal measurement and access in descending order of priorities of candidate network devices.

Optionally, the terminal device performs measurement on an adjacent candidate network device with a low priority and reports a measurement result only when a candidate network device with a high priority fails handover decision.

It should be understood that a specific manner of determining a priority of a candidate network device is not limited in this embodiment of this application.

For example, at a same frequency, that both satellites are in an ascending pass or a descending pass corresponds to a high priority, and that one satellite is in an ascending pass and another satellite is in a descending pass corresponds to a low priority. A satellite in an ascending pass is a satellite moving from south to north. For example, a velocity component Vz of the satellite on a z-axis in an earth-centered, earth-fixed (ECEF, Earth centered earth fixed) coordinate system is greater than 0. A satellite in a descending pass is a satellite moving from north to south. For example, a velocity component Vz of the satellite on the z-axis in the earth-centered, earth-fixed ECEF coordinate system is less than 0.

For example, a short transmission path corresponds to a high priority, and a long transmission path corresponds to a low priority. It should be understood that a length of the transmission path may be understood as a distance of the transmission path and/or a hop count of the transmission path. This is not limited in this embodiment of this application.

For example, an intra-plane inter-satellite link corresponds to a high priority, a satellite-earth link corresponds to a high priority, and an inter-plane inter-satellite link corresponds to a low priority.

According to the foregoing solution, the first network device can include a priority of one or more candidate network devices in the third information sent to the terminal device, to indicate the terminal device to perform signal measurement and access on the candidate network device based on the priority. To be specific, the terminal device is indicated to preferentially access a candidate network device with short mobility interruption time, to prevent the terminal device from performing measurement on and accessing an inappropriate second network device, to shorten mobility interruption time and reduce user data forwarding overheads during handover.

With reference to the first aspect, in some implementations of the first aspect, the method further includes: The first network device sends fourth information to the terminal device, where the fourth information indicates the terminal device to report mobility interruption time based on the second periodicity, or the fourth information indicates the terminal device to report the mobility interruption time when the mobility interruption time is greater than a fourth threshold.

By way of example rather than limitation, the mobility interruption time is MIT (mobility interruption time).

According to the foregoing solution, the first network device indicates the terminal device to report the mobility interruption time to a network device to which the terminal device is to switch, so that the network device to which the terminal device is to switch can determine, based on the mobility interruption time, whether to continue to send a handover-related measurement signal to the area in which the terminal device is located, to prevent another terminal device in the same area as the terminal device from performing measurement on and accessing a same inappropriate candidate network device, and shorten mobility interruption time.

With reference to the first aspect, in some implementations of the first aspect, the first request message includes an identifier of the second network device, a second time period, and the first information, and the second time period is a time period in which the terminal device performs handover.

It should be understood that the first request message may be an early path switch request (Early path switch request) message, and the core network device may be a user plane network function (User Plane Function, UPF), an access and mobility management function (Access and Mobility management Function, AMF), or the like.

It should be understood that the second time period is included in a conditional handover (Conditional Handover, CHO) time period of the terminal device. More specifically, the second time period is a time period before a moment at which the terminal device accesses a target network.

According to the foregoing solution, before the terminal device switches to a candidate network device, the first network device can request the core network device to send user data of the terminal device to the candidate network device within the second time period, to shorten mobility interruption time and reduce user data forwarding overheads during handover.

With reference to the first aspect, in some implementations of the first aspect, the method further includes: The first network device sends fifth information to the terminal device, where the fifth information indicates one or more third time periods, and the third time period is a time period in which the terminal device is allowed to receive data or a radio signal, and/or send data or a radio signal.

It should be understood that the fourth time period is all or a part of time periods of the UE within the mobility interruption time.

It should be understood that a specific manner of indicating the third time period by the first network device is not limited in this embodiment of this application.

In a possible implementation, the fifth information includes one or more pieces of time period information. By way of example rather than limitation, the fifth information includes MIT-DRX [t1, t2], MIT-DTX [t3, t4], and MIT-DRX/MIT-DTX [t5, t6]. The MIT-DRX [t1, t2] indicates the terminal device to stop receiving a signal within the time period [t1, t2]. The MIT-DTX [t3, t4] indicates the terminal device to stop sending a signal within the time period [t3, t4]. The MIT-DRX/MIT-DTX [t5, t6] indicates the terminal device to stop receiving and sending data or a radio signal within the time period [t5, t6].

In another possible implementation, the fifth information includes a first moment and first duration, and the first duration can be discontinuous reception DRX duration and/or discontinuous transmission DTX duration.

By way of example rather than limitation, the first moment is a moment at which the terminal device returns handover response completion to a candidate network device, and the first duration is 1s. To be specific, the terminal device stops sending data or a radio signal within 1s after a moment at which the terminal device sends a handover response.

According to the foregoing solution, the first network device indicates, by using the fifth information, the terminal device to sleep within one or more third time periods during handover/reselection, to reduce energy overheads of the terminal device during handover/reselection.

According to a second aspect, a communication method is provided. The method may be performed by a terminal device. The terminal device herein may be the terminal device itself, or may be a processor, a module, a chip, a chip system, or the like that is in the terminal device and that implements the method. This is not limited in this application. The method includes:

The terminal device receives third information from a first network device, where the third information indicates whether the terminal device is allowed to switch to at least one second terminal device, and the first network device is a current serving network device of the terminal device. The terminal device performs cell handover based on the third information.

With reference to the second aspect, in some implementations of the second aspect, the third information includes an identifier of a first periodicity, the third information indicates the terminal device to perform signal measurement based on the first periodicity, the first periodicity does not overlap a second periodicity, and the second periodicity is a transmission periodicity of a measurement reference signal of the second network device.

With reference to the second aspect, in some implementations of the second aspect, the third information includes a priority of at least one candidate network device, and the third information indicates the terminal device to perform signal measurement based on the priority of the at least one candidate network device.

It should be understood that a priority of each candidate network device is determined based on at least one of the following: orbit types of the first network device and the candidate network device, a distance between the first network device and the candidate network device, and a type of a link between the first network device and the candidate network device.

With reference to the second aspect, in some implementations of the second aspect, the method further includes: The terminal device receives fourth information from the first network device, where the fourth information indicates the terminal device to report mobility interruption time based on the second periodicity, or the fourth information indicates the terminal device to report the mobility interruption time when the mobility interruption time is greater than a fourth threshold. The terminal device reports the mobility terminal time based on the fourth information.

It should be understood that the terminal device can report the mobility interruption time to a network device (referred to as a third network device below) in a cell to which the terminal device is to switch; or the terminal device can report the mobility interruption time to the first network device, and the first network device forwards the mobility interruption time to the third network device.

It should be understood that a specific manner of reporting the mobility interruption time by the terminal device is not limited in this embodiment of this application.

In an example, the terminal device can report a specific value of the mobility interruption time.

In another example, the terminal device can report a quantized value or a level corresponding to the mobility terminal time. For example, the terminal device can indicate the level of the mobility interruption time by using 1 bit. To be specific, the terminal device determines, based on whether the specific value of the mobility interruption time is greater than a sixth threshold, the level corresponding to the mobility interruption time; and reports, by using 0 or 1, the level corresponding to the mobility interruption time.

With reference to the second aspect, in some implementations of the second aspect, the fourth information further indicates a second resource, and the second resource is a resource for the terminal device to report the mobility interruption time.

It should be understood that the second resource includes one or more of the following: a time resource, a frequency resource, a polarization resource, a beam resource, and the like.

With reference to the second aspect, in some implementations of the second aspect, the method further includes: The terminal device receives fifth information from the first network device, where the fifth information indicates one or more third time periods, and the third time period is a time period in which the terminal device is allowed to receive data or a radio signal, and/or send data or a radio signal.

According to a third aspect, a communication method is provided. The method may be performed by a second network device. The second network device herein may be the second network device itself, or may be a processor, a module, a chip, a chip system, or the like that is in the second network device and that implements the method. This is not limited in this application. The method includes:

The second network device obtains first information of a first network device, where the first information includes information about a transmission path between the second network device and the first network device. The second network device receives second information from the first network device, where the second information indicates that the second network device is barred from serving a terminal device, and the first network device is a serving network device of the terminal device. The second network device sends measurement reference information based on the second information.

It should be understood that a specific manner of obtaining the first network device by the second network device is not limited in this embodiment of this application. For a specific manner, refer to the specific manner of obtaining the candidate network device by the first network device in the first aspect. Details are not described herein again.

With reference to the third aspect, in some implementations of the third aspect, the second information includes an identifier of a first time period and an identifier of a first area, the second information indicates the second network device to stop sending a measurement reference signal to the first area within the first time period, and the first area is an area in which the terminal device is located.

With reference to the third aspect, in some implementations of the third aspect, that the second network device sends the measurement reference information based on the second information includes: The second network device stops, based on the second information, sending a measurement reference signal to the first area within the first time period.

With reference to the third aspect, in some implementations of the third aspect, the second information includes an identifier of a first time period and an identifier of a first area, the second information indicates the second network device to send eighth information to the first area within the first time period, the eighth information indicates that access of the terminal device is barred, and the first area is an area in which the terminal device is located.

By way of example rather than limitation, the eighth information is included in a cell barred/restricted (Cell Barred) indication message.

With reference to the third aspect, in some implementations of the third aspect, that the second network device sends the measurement reference information based on the second information includes: The second network device sends the eighth information to the first area within the first time period based on the second information.

According to the foregoing solution, after interacting with the first network device, the second network device is barred, according to an indication of the first network device, from serving a terminal device in a specific area, to prevent the terminal device from performing measurement on and accessing an inappropriate second network device, and shorten mobility interruption time.

According to a fourth aspect, a communication method is provided. The method may be performed by a second network device. The second network device herein may be the second network device itself, or may be a processor, a module, a chip, a chip system, or the like that is in the second network device and that implements the method. This is not limited in this application. The method includes:

The second network device receives fourth information from at least one terminal device, where the fourth information indicates mobility interruption time during handover of the terminal device to the second network device, and the at least one terminal device is in a same area. The second network device determines, based on the mobility interruption time, a policy for sending a measurement reference signal to the area.

With reference to the fourth aspect, in some implementations of the fourth aspect, that the second network device determines, based on the mobility interruption time, the policy for sending the measurement reference signal to the area includes: When mobility interruption time reported by a terminal device is greater than a fourth threshold, the second network device stops sending the measurement reference signal to the area; or sends eighth information to the area, where the eighth information indicates that access of the terminal device is barred.

With reference to the fourth aspect, in some implementations of the fourth aspect, that the second network device determines, based on the mobility interruption time, the policy for sending the measurement reference signal to the area includes: When a quantity of terminal devices with mobility terminal time greater than a fourth threshold in a same area is greater than a sixth threshold, the second network device stops sending the measurement reference signal to the area; or sends eighth information to the area, where the eighth information indicates that access of the terminal devices are barred.

According to the foregoing solution, after receiving mobility interruption time of a terminal device in a same area, the second network device can determine, based on the mobility interruption time of the terminal device in the area, a policy for sending a measurement reference signal to the area, to prevent the terminal device from performing measurement on and accessing an inappropriate second network device, and shorten mobility interruption time.

According to a fifth aspect, a communication method is provided. The method may be performed by a first network device. The first network device herein may be the first network device itself, or may be a processor, a module, a chip, a chip system, or the like that is in the first network device and that implements the method. This is not limited in this application. The method includes:

The first network device obtains first information of at least one candidate network device, where the first information of the candidate network device includes information about a transmission path between the first network device and the candidate network device. The first network device sends a first request message to a core network device based on the first information, where the first request message is used to request the core network device to send uplink data of a terminal device to at least one second network device, and the at least one second network device belongs to the at least one candidate network device.

First information of each candidate network device includes information about a transmission path between the first network device and the candidate network device.

With reference to the fifth aspect, in some implementations of the fifth aspect, the information about the transmission path between the first network device and the candidate network device includes one or more of the following: a specific transmission path between the first network device and the candidate network device, a hop count included in the transmission path, a delay of the transmission path, a distance of the transmission path, weight information corresponding to the transmission path, and the like. The weight information may correspond to a transmission cost, a transmission rate, a transmission priority, or the like of the path.

According to a sixth aspect, a communication method is provided. The method may be performed by a core network device. The core network device herein may be the core network device itself, or may be a processor, a module, a chip, a chip system, or the like that is in the core network device and that implements the method. This is not limited in this application. The method includes:

The core network device receives a first request message from a first network device, where the first request message is used to request the core network device to send uplink data of a terminal device to at least one second network device. The core network device sends the uplink data of the terminal device to the at least one second network device based on the first request message.

It should be understood that the first request message may be used to request the core network device to send the uplink data and/or downlink data of the terminal device to the at least one second network device.

It should be understood that the first request message may be an early path switch request (Early path switch request) message, and the core network device may be a user plane network function (User Plane Function, UPF), an access and mobility management function (Access and Mobility management Function, AMF), or the like.

With reference to the sixth aspect, in some implementations of the sixth aspect, the first request message includes an identifier of the at least one second network device, a second time period, and first information, the second time period is a time period in which the terminal device performs handover, and the first information includes information about a transmission path of the first network device and the at least one second network device. That the core network device sends the uplink data of the terminal device to the at least one second network device based on the first request message includes: The core network device determines a transmission path from the core network device to the at least one second network device based on the first request message. The core network device sends the uplink data of the terminal device to the at least one second network device within the second time period based on the transmission path from the core network device to the at least one second network device.

It should be understood that the second time period is a conditional handover (Conditional Handover, CHO) time period of the terminal device.

With reference to the sixth aspect, in some implementations of the sixth aspect, the information, included in the first information, about the transmission path between the first network device and the second network device includes one or more of the following: a specific transmission path, a hop count included in the transmission path, a delay of the transmission path, and weight information corresponding to the transmission path.

According to the foregoing solution, before the terminal device switches to a candidate network device, the first network device can request the core network device to send user data of the terminal device to the candidate network device within the second time period, to shorten mobility interruption time.

According to a seventh aspect, a communication apparatus is provided. The apparatus includes a transceiver unit and a processing unit. The transceiver unit is configured to obtain first information of at least one candidate network device, where first information of each candidate network device includes information about a transmission path between a first network device and the candidate network device. The processing unit is configured to perform at least one of the following based on the first information: sending second information to at least one second network device, where the second information indicates that the at least one second network device is barred from serving a terminal device, the at least one second network device belongs to the at least one candidate network device, and the first network device is a serving network device of the terminal device; or sending third information to the terminal device, where the third information indicates whether the terminal device is allowed to switch to the at least one second network device; or sending a first request message to a core network device, where the first request message is used to request the core network device to send uplink data of the terminal device to the at least one second network device.

It should be understood that the seventh aspect is an apparatus-side implementation corresponding to the first aspect. Supplements, explanations, and descriptions of beneficial effects of the first aspect are also applicable to the seventh aspect. Details are not described again.

According to an eighth aspect, a communication apparatus is provided. The apparatus includes a transceiver unit and a processing unit. The transceiver unit is configured to receive third information from a first network device, where the third information indicates whether a terminal device is allowed to switch to at least one second terminal device, and the first network device is a current serving network device of the terminal device. The processing unit is configured to perform cell handover based on the third information.

It should be understood that the eighth aspect is an apparatus-side implementation corresponding to the second aspect. Supplements, explanations, and descriptions of beneficial effects of the second aspect are also applicable to the eighth aspect. Details are not described again.

According to a ninth aspect, a communication apparatus is provided. The apparatus includes a transceiver unit and a processing unit. The transceiver unit is configured to obtain first information of a first network device, where the first information includes information about a transmission path between a second network device and the first network device. The transceiver unit is further configured to receive second information from the first network device, where the second information indicates that the second network device is barred from serving a terminal device, and the first network device is a serving network device of the terminal device. The processing unit is configured to send measurement reference information based on the second information.

It should be understood that the ninth aspect is an apparatus-side implementation corresponding to the third aspect. Supplements, explanations, and descriptions of beneficial effects of the third aspect are also applicable to the ninth aspect. Details are not described again.

According to a tenth aspect, a communication apparatus is provided. The apparatus includes a transceiver unit and a processing unit. The transceiver unit is configured to receive fourth information from at least one terminal device, where each piece of fourth information indicates mobility interruption time during handover of the terminal device to a second network device, and the at least one terminal device is in a same area. The processing unit is configured to determine, based on the mobility interruption time, a policy for sending a measurement reference signal to the area.

It should be understood that the tenth aspect is an apparatus-side implementation corresponding to the fourth aspect. Supplements, explanations, and descriptions of beneficial effects of the fourth aspect are also applicable to the tenth aspect. Details are not described again.

According to an eleventh aspect, a communication apparatus is provided. The apparatus includes a transceiver unit and a processing unit. The transceiver unit is configured to obtain first information of at least one candidate network device, where first information of each candidate network device includes information about a transmission path between a first network device and the candidate network device. The processing unit is configured to send a first request message to a core network device based on the first information, where the first request message is used to request the core network device to send uplink data of a terminal device to at least one second network device, and the at least one second network device belongs to the at least one candidate network device.

It should be understood that the eleventh aspect is an apparatus-side implementation corresponding to the fifth aspect. Supplements, explanations, and descriptions of beneficial effects of the fifth aspect are also applicable to the eleventh aspect. Details are not described again.

According to a twelfth aspect, a communication apparatus is provided. The apparatus includes a transceiver unit and a processing unit. The transceiver unit is configured to receive a first request message from a first network device, where the first request message is used to request a core network device to send uplink data of a terminal device to at least one second network device. The processing unit is configured to send the uplink data of the terminal device to the at least one second network device based on the first request message.

It should be understood that the twelfth aspect is an apparatus-side implementation corresponding to the sixth aspect. Supplements, explanations, and descriptions of beneficial effects of the sixth aspect are also applicable to the twelfth aspect. Details are not described again.

According to a thirteenth aspect, this application provides a communication apparatus. The communication apparatus includes a processor, configured to implement the method according to any one of the first aspect to the eleventh aspect or the implementations of the first aspect to the eleventh aspect. The processor is coupled to a memory. The memory is configured to store instructions and data. When the processor executes the instructions stored in the memory, the method according to any one of the first aspect to the eleventh aspect or the implementations of the first aspect to the eleventh aspect may be implemented.

Optionally, the communication apparatus may further include a memory. Optionally, the memory may be coupled to the processor. Optionally, the communication apparatus may further include a communication interface. The communication interface is used by the apparatus to communicate with another device. For example, the communication interface may be a transceiver, a hardware circuit, a bus, a module, a pin, or another type of communication interface.

In an example, the communication apparatus may be a network device, for example, an access network device, or may be an apparatus, a module, a chip, or the like disposed in the network device, or may be an apparatus that can be used in combination with the network device.

In another example, the communication apparatus may be a terminal device, or may be an apparatus, a module, a chip, or the like disposed in the terminal device, or may be an apparatus that can be used in combination with the terminal device.

According to a fourteenth aspect, this application provides a communication system, including at least one of a first network device, a second network device, a terminal device, and a core network device. The first network device is configured to perform the first network device according to any one of the first aspect, the fifth aspect, or the implementations of the first aspect or the fifth aspect. The second network device is the second network device according to any one of the third aspect, the fourth aspect, or the implementations of the third aspect or the fourth aspect. The terminal device is the terminal device according to any one of the second aspect or the implementations of the second aspect. The core network device is the core network device according to any one of the sixth aspect or the implementations of the sixth aspect.

According to a fifteenth aspect, this application further provides a computer program. When the computer program is run on a computer, the computer is enabled to perform the method according to any one of the first aspect to the eleventh aspect or the implementations of the first aspect to the eleventh aspect.

According to a sixteenth aspect, this application further provides a computer program product, including instructions. When the instructions are run on a computer, the computer is enabled to perform the method according to any one of the first aspect to the eleventh aspect or the implementations of the first aspect to the eleventh aspect.

According to a seventeenth aspect, this application further provides a computer-readable storage medium. The computer-readable storage medium stores a computer program or instructions. When the computer program or the instructions are run on a computer, the computer is enabled to perform the method according to any one of the first aspect to the eleventh aspect or the implementations of the first aspect to the eleventh aspect.

According to an eighteenth aspect, this application further provides a chip. The chip is configured to read a computer program stored in a memory, to perform the method according to any one of the first aspect to the eleventh aspect or the implementations of the first aspect to the eleventh aspect. Alternatively, the chip is configured to perform the method according to any one of the first aspect to the eleventh aspect or the implementations of the first aspect to the eleventh aspect.

According to a nineteenth aspect, this application further provides a chip system. The chip system includes a processor, configured to support an apparatus in implementing the method according to any one of the first aspect to the eleventh aspect or the implementations of the first aspect to the eleventh aspect. In a possible design, the chip system further includes a memory, and the memory is configured to store a program and data that are necessary for the apparatus. The chip system may include a chip, or may include a chip and another discrete component.

### BRIEF DESCRIPTION OF DRAWINGS

FIG. 1 is a diagram of a communication system 100 to which an embodiment of this application is applicable;
FIG. 2 is a diagram of an application architecture to which an embodiment of this application is applicable;
FIG. 3 is a diagram of a satellite communication system;
FIG. 4 is a diagram of mappings between beams and beam positions of a satellite at different moments;
FIG. 5 is a diagram of a group handover scenario or a handover scenario of a satellite communication system;
FIG. 6 is a diagram of a handover process;
FIG. 7 is a diagram of a communication method 300 according to an embodiment of this application;
FIG. 8 is a diagram of a handover scenario according to an embodiment of this application;
FIG. 9 is a diagram of a process 400 to which a communication method 300 provided in an embodiment of this application is applicable;
FIG. 10 is a diagram of a process 500 to which a communication method 300 provided in an embodiment of this application is applicable;
FIG. 11 is a diagram of a process 600 to which a communication method 300 provided in an embodiment of this application is applicable;
FIG. 12 is a diagram of a process 700 to which a communication method 300 provided in an embodiment of this application is applicable;
FIG. 13 is a diagram of a structure of a communication apparatus 1300 according to an embodiment of this application; and
FIG. 14 is a diagram of a structure of a communication apparatus 1400 according to an embodiment of this application.

### DESCRIPTION OF EMBODIMENTS

The following describes the technical solutions of this application with reference to the accompanying drawings.

The technical solutions of this application may be applied to a non-terrestrial network (non-terrestrial network, NTN) system such as a satellite communication system, a high-altitude platform (high-altitude platform station, HAPS) communication system, or an uncrewed aerial vehicle, for example, an integrated communication and navigation (integrated communication and navigation, IcaN) system, a global navigation satellite system (global navigation satellite system, GNSS), and an ultra-dense low earth orbit satellite communication system.

The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system.

The satellite communication system includes a user equipment (UE) and a network device. The user equipment may also be referred to as a user terminal, a mobile station, or the like. The network device may include one or more satellites and a terrestrial station device. The terrestrial station device may also be referred to as a core network device. The satellite may be a low earth orbit (low earth orbit, LEO) satellite, a non-geostationary earth orbit (non-geostationary earth orbit, NGEO) satellite, or the like. The satellite may provide a communication service, a navigation service, a positioning service, and the like for a terminal device through a plurality of beams. The satellite covers a service area through the plurality of beams, and different beams may be used to perform communication in one or more of the following modes: time division, frequency division, and space division. The satellite performs wireless communication with the terminal device by broadcasting a communication signal, a navigation signal, and the like. The satellite may perform wireless communication with the terrestrial station device. The satellite mentioned in embodiments of this application may be a satellite base station, or may include an orbit receiver or a repeater configured to relay information, or may be a network-side device mounted on a satellite.

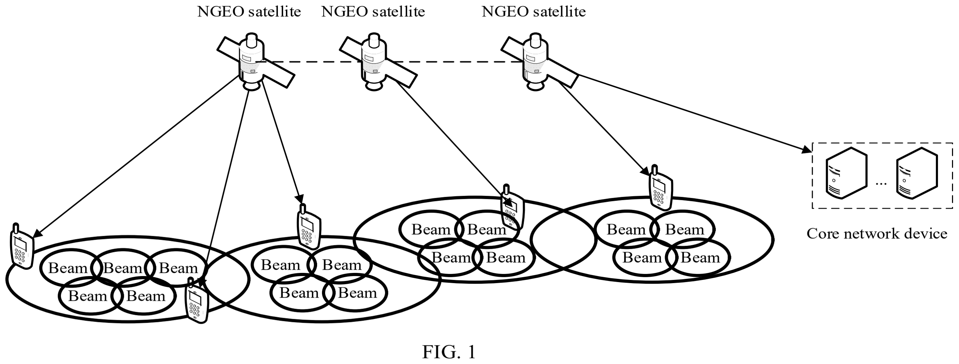

FIG. 1 is a diagram of a communication system 100 to which an embodiment of this application is applicable. As shown in FIG. 1, a satellite provides a communication service for a terminal device through a plurality of beams. The satellite in this scenario is a non-geostationary orbit (non-geostationary earth orbit, NGEO) satellite, and the satellite is connected to a core network device. The satellite covers a service area through the plurality of beams, and different beams may be used to perform communication in one or more of the following modes: time division, frequency division, and space division. The satellite provides the communication service and a navigation service for the terminal device by broadcasting a communication signal and a navigation signal. The satellite mentioned in embodiments of this application may alternatively be a satellite base station or a network-side device mounted on a satellite.

The satellite communication system includes a transparent satellite architecture and a non-transparent satellite architecture. Transparent transmission is also referred to as bent-pipe forwarding transmission. To be specific, only a frequency conversion process, a signal amplification process, and the like are performed on a signal on a satellite, and the satellite is transparent to the signal. Non-transparent transmission is also referred to as regenerative (on-satellite access/processing) transmission. To be specific, a satellite has a part or all of functions of a base station.

The terminal device mentioned in embodiments of this application includes various devices with a wireless communication function, for example, a handheld device, a vehicle-mounted device, a wearable device, a computing device, or another processing device connected to a wireless modem, and may be specifically a user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

The terrestrial station device is, for example, a device in a core network (core network, CN) in an existing mobile communication architecture (for example, a 3GPP access architecture of a 5G network) or a device in a core network in a future mobile communication architecture. As a bearer network, the core network provides an interface for connecting to a data network, provides communication connection, authentication, management, and policy control for the user equipment (UE), carries a data service, and the like. The CN may further include network elements such as an access and mobility management network function (Access and Mobility Management Function, AMF), a session management network function (Session Management Function, SMF), an authentication server network function (Authentication Server Function, AUSF), a policy control function (Policy control Function, PCF), and a user plane function (User Plane Function, UPF) network element. The AMF network element is configured to manage access and mobility of the UE, and is mainly responsible for functions such as UE authentication, UE mobility management, and UE paging.

The network device may alternatively include but is not limited to an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. The network device may alternatively be a gNB, a TRP, or a TP in a 5G system, or one antenna panel or a group of antenna panels (including a plurality of antenna panels) of a base station in a 5G system. In addition, the network device may alternatively be a network node, for example, a BBU or a distributed unit (distributed unit, DU), included in a gNB or a TP. The network device may alternatively be a device carrying a network-side function in a device-to-device (device-to-device, D2D) communication system, a machine-to-machine (machine-to-machine, M2M) communication system, an internet of things (Internet of Things, IoT) communication system, an internet of vehicles communication system, or another communication system.

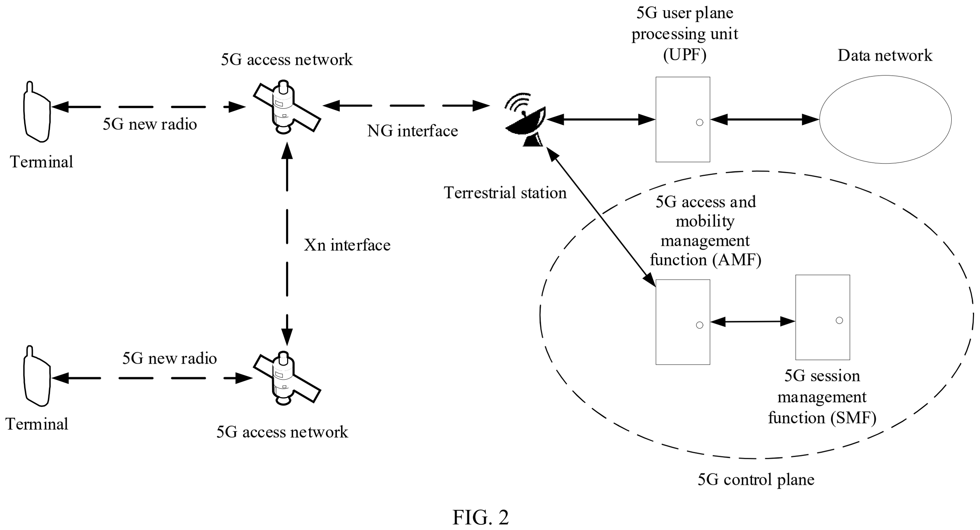

FIG. 2 is a diagram of an application architecture to which an embodiment of this application is applicable. A terrestrial mobile terminal, namely, a UE, accesses a network through 5G new radio. A 5G access network device is deployed on a satellite, and is connected to a terrestrial core network through a radio link. In addition, there is a radio link between satellites, to implement signaling interaction and user data transmission between access network devices. All network elements in FIG. 2 and their interfaces are described as follows:

A terminal device is a mobile device that supports 5G new radio, and is typically, for example, a mobile phone or a pad. The terminal device may access a satellite network through an air interface, and initiate a call service, a network access service, or the like.

The 5G access network device mainly provides a radio access service, schedules a radio resource for an access terminal, and provides a reliable wireless transmission protocol and data encryption protocol and the like, and is, for example, a base station.

A 5G core network provides the following services: user access control, mobility management, session management, user security authentication, charging, and the like. The 5G core network includes a plurality of functional units, and may be divided into a control plane functional entity and a data plane functional entity. An access and mobility management function (access and mobility management function, AMF) is responsible for user access management, security authentication, and mobility management. A user plane function (user plane function, UPF) is responsible for functions of managing user plane data transmission, traffic statistics, and the like.

A terrestrial station is responsible for forwarding signaling and service data between a satellite access network device and the 5G core network.

The 5G new radio is a radio link between a terminal and an access network device.

An Xn interface is an interface between 5G access network devices, and is mainly used for signaling interaction for handover or the like.

An NG interface is an interface between the 5G access network device and the 5G core network, and is mainly used for exchanging signaling, for example, NAS signaling, of the core network, and service data of a user.

For ease of understanding embodiments of this application, terms used in this application are briefly described first.

### 1. Non-terrestrial communication network NTN (non-terrestrial network, NTN)

The NTN includes the following nodes: a satellite network, a high-altitude platform, an uncrewed aerial vehicle, and the like. The NTN has significant advantages such as global coverage, long-distance transmission, flexible networking, convenient deployment, and being free from geographical limitations, and has been widely used in a plurality of fields such as maritime communication, positioning and navigation, disaster relief, scientific experiments, video broadcasting, and earth observation. A terrestrial 5G network, a satellite network, and the like are integrated and complement each other to form an integrated communication network that provides seamless global coverage over sea, land, air, space, and ground, to meet a plurality of ubiquitous service requirements of users.

As an important part of the NTN, a next-generation satellite network generally has a trend of being ultra-dense and heterogeneous. First, a scale of the satellite network develops from 66 satellites in an Iridium constellation to 720 satellites in a OneWeb constellation, and finally extends to more than 12000 satellites in a Starlink (Starlink) ultra-dense LEO satellite constellation. In addition, the satellite network has a heterogeneous characteristic, and develops from a conventional single-layer communication network to a multi-layer communication network. A communication satellite network also tends to have complex and diversified functions, and is gradually compatible with and supports the following functions: navigation enhancement, earth observation, on-orbit processing of multidimensional information, and the like.

### 2. Fixed-beam communication system

Satellite communication is used as an example. Based on an operation mode of a payload (for example, a beam), usually, there may be a fixed (earth-fixed or quasi-earth fixed) satellite communication system and a moving (earth-moving) satellite communication system.

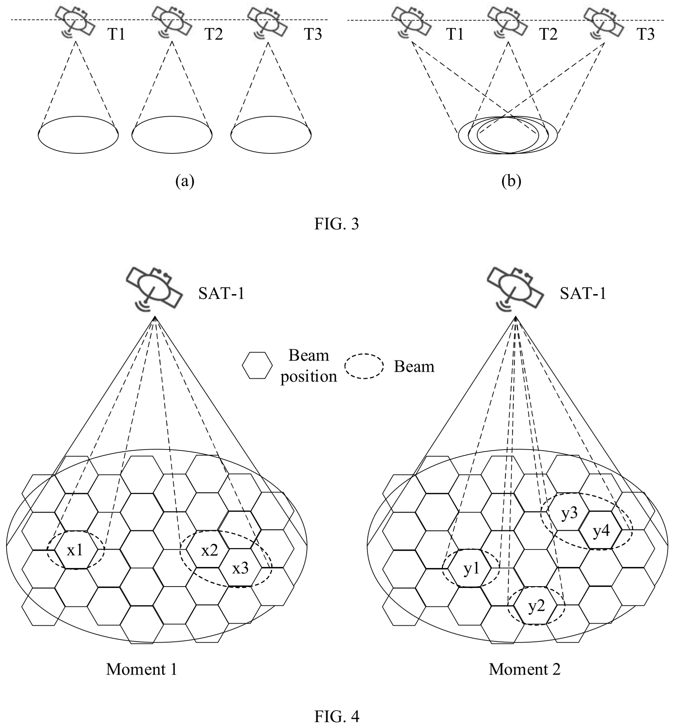

As shown in (a) in FIG. 3, within a period of time, for example, a time period of T1, T2, and T3 shown in the figure, a coverage area of a beam of a satellite moves with the satellite.

As shown in (b) in FIG. 3, within a period of time, for example, a time period of T1, T2, and T3 shown in the figure, a satellite dynamically adjusts a beam direction, to enable a beam to approximately cover a same area on the ground.

### 3. Mapping between a beam and a beam position

To simplify beam management and scheduling processes and the like of a satellite network, a beam position set corresponding to a service area usually needs to be predefined, to complete mapping between a beam and a beam position. To be specific, a beam of a satellite serves different beam positions at different time.

As shown in FIG. 4, a coverage area of a satellite SAT-1 may be divided into a plurality of beam positions (for example, in a regular hexagonal shape), and the satellite serves different beam position subsets through limited beams in a time division mode. At a moment 1, the satellite serves beam positions x1, x2, and x3 through two beams; and at a moment 2, the satellite serves beam positions y1, y2, y3, and y4 through three beams. It should be noted that, at different tilt angles (antenna opening angles), a coverage area of a beam may vary. Therefore, a mapping between a beam and a beam position may be a one-to-one mapping or a one-to-many mapping.

### 4. Mobility management problem

In embodiments of this application, mobility management is mainly reselection or handover of a user equipment UE in a beam position. In a beam-hopping satellite communication system, movement of a satellite node causes group handover (for UEs in a connected state) or group reselection (for UEs in an idle state) to users in a beam position in a specific area.

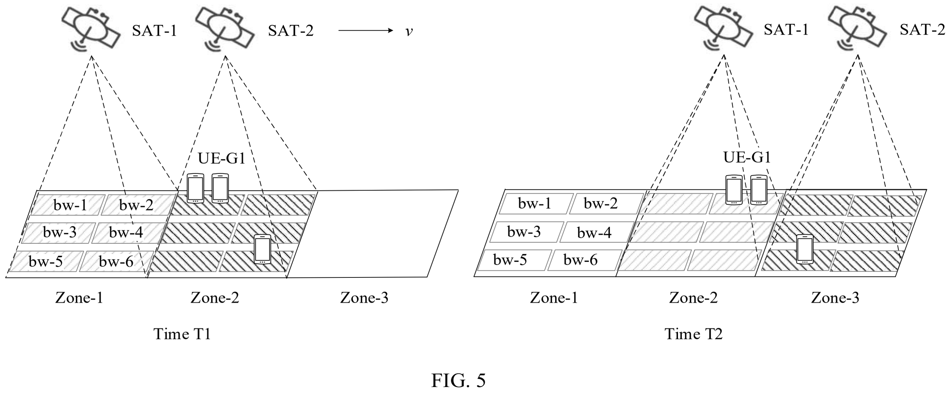

The group handover is used as an example. As shown in FIG. 5, there is a UE cluster, namely, a UE-G1 (the UE-G1 includes a plurality of UEs), in a single beam position in an area Zone-2. At time T1, the UE-G1 is served by one or more beams of a satellite SAT-2. At time T2, the beam position cannot be served due to movement of the satellite SAT-2, and the UE-G1 is served by one or more beams of a satellite SAT-1 instead. Therefore, the UE cluster UE-G1 undergoes group handover. In addition, because the satellite moves at a high speed of approximately 7.5 km/s, group handover occurs at a frequency of approximately once every several seconds to tens of seconds. In other words, in a beam-hopping LEO satellite network, group handover mainly triggered by network mobility becomes a normal phenomenon.

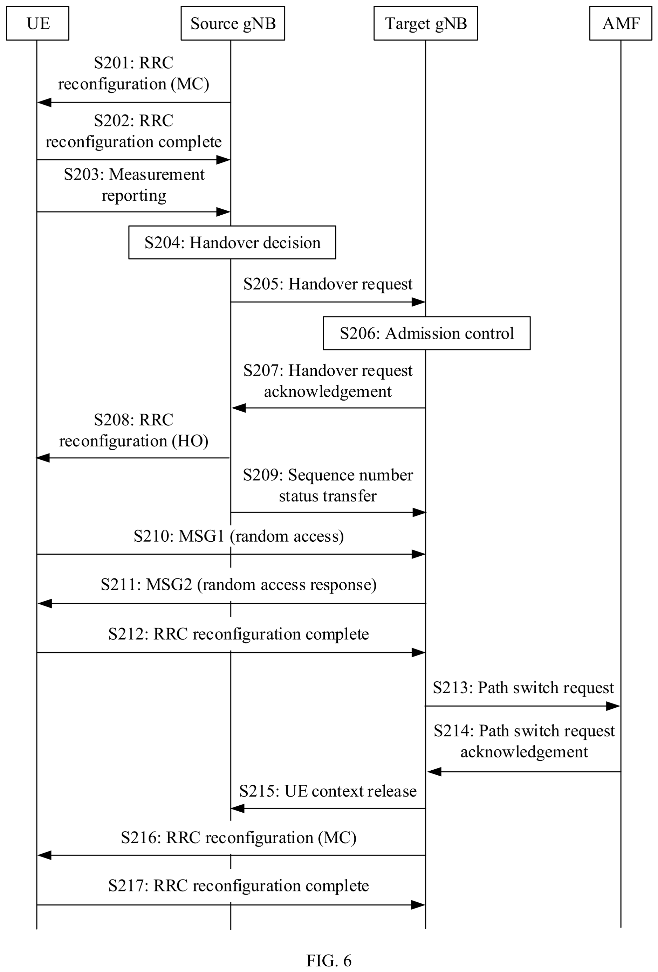

Mobility management mainly includes cell handover, cell reselection, a registration update, a tracking area update, and the like. The cell handover is used as an example. As shown in FIG. 6, through phase-based division, a handover process of a terrestrial network mainly includes the following steps.

### Handover preparation phase:

S201: A source base station sends a measurement control-related RRC reconfiguration message (RRCReconfiguration (MC)) to a UE.

Specifically, the source base station delivers, to the UE, measurement configurations corresponding to a plurality of cells (including a serving cell and a neighboring cell), and the UE measures signal quality (for example, reference signal received power (Reference Signal Received Power, RSRP) and/or reference signal received quality (Reference Signal Received Quality, RSRQ)) of the cells based on the measurement configurations.

S202: The UE sends an RRC reconfiguration complete message (RRCReconfigurationComplete) to the source base station. To be specific, after receiving the measurement control message delivered by the source base station, the UE returns the RRC reconfiguration complete message to the source base station.

S203: The UE sends a measurement report message (MeasurementReport) to the source base station.

Specifically, the UE performs signal measurement based on the received measurement control message, and reports a measurement result to a network. A reporting manner may be periodic reporting or event-triggered reporting. In the event-triggered reporting, a reporting condition may be configured as follows: Signal quality of the serving cell is less than a threshold 1, and/or signal quality of the neighboring cell is greater than a threshold 2.

S204: The source base station makes a handover decision.

Specifically, the source base station selects an appropriate neighboring cell based on the reported result, and exchanges information related to user handover, for example, context information, admission control, and reserved resources.

S205: The source base station sends a handover request message (HandoverRequest) to a target base station.

S206: The target base station performs admission control.

S207: The target base station sends a handover request acknowledgement message (HandoverRequestAcknowledge) to the source base station.

S208: The source base station sends a handover-related RRC reconfiguration message (RRCReconfiguration (HO)) to the UE.

### Handover execution phase:

S209: The source base station sends sequence number status transfer (SN STATUS TRANSFER) to the target base station.

S210: The UE initiates random access (Random Access), or referred to as an MSG1 (Message1), to the target base station.

A random access preamble needed during handover of the UE is a dedicated preamble different from a contention-based random access preamble used during initial access. In addition, a time-domain periodicity of a RACH may be set to 10 ms, 20 ms, 40 ms, 80 ms, or 160 ms during handover. This is the same as a configuration of a RACH periodicity during initial access.

S211: The target base station sends a random access response (Random Access Response), or referred to as an MSG2 (Message2), to the UE.

S212: The UE sends an RRC reconfiguration complete message (RRCReconfigurationComplete) to the target base station.

### Handover completion phase:

S213. The target base station sends a path switch request message (PATH SWITCH REQUEST) to an AMF.

S214: The AMF sends a path switch request acknowledgement message (PATH SWITCH REQUEST ACKNOWLEDGE) to the target base station.

S215: The target base station sends a UE context release message (UE CONTEXT RELEASE) to the source base station.

S216: The target base station sends a measurement control-related RRC reconfiguration message (RRCReconfiguration (MC)) to the UE.

S217: The UE sends an RRC reconfiguration complete message (RRCReconfigurationComplete) to the target base station.

### 4. Cell handover/reselection

For an NR cell, there is an existing cell mobility management mechanism. For example, there is a cell reselection mechanism. A terminal device monitors, in an idle mode, signal quality of a cell on which the terminal device currently camps and a neighboring cell, and selects a cell that has good signal quality and that meets a camping condition to camp on. During cell selection, a cell selected for camping needs to meet a specific condition. For example, the terminal device detects that signal quality of the cell to be camped on is greater than or equal to a predetermined threshold. The predetermined threshold may be indicated by a network device to the terminal device, or may be preconfigured on the terminal device.

For another example, there is a cell handover mechanism, including cell handover triggered based on signal quality (similar to the foregoing mechanism of performing cell reselection based on signal quality, where details are not described again) and cell handover triggered based on a location (an enhanced mechanism based on the cell handover triggered based on signal quality, where this mechanism is applicable to a scenario in which a signal quality difference between a center and an edge of a cell is insignificant). If a terminal device has established a connection to a cell, the cell may be referred to as a serving cell or a source cell. Then, if a location of the terminal device changes, the cell serving the terminal device no longer meets a condition. For example, a distance between the terminal device and the source cell is greater than a preset threshold, and a distance between the terminal device and a target cell is less than the preset threshold. In this case, the terminal device may switch to the target cell and establish a connection to the target cell.

A cell may be understood as an area covered by a network device (for example, a base station), or a part of an area covered by a network device (for example, an area covered by a sector antenna). To be specific, one network device may correspond to one cell, or one network device may correspond to a plurality of cells.

For cell reselection/handover, a network usually delivers, to a UE in a broadcast form, a measurement configuration parameter or the like related to a neighboring cell, and the UE compares a measurement value (for example, RSRP and/or RSRQ and/or an SINR) of the UE with the parameter (for example, a reselection threshold) delivered by the network, and autonomously reselects a target neighboring cell after a condition is met. It should be noted that, because near-far effect in an NTN is insignificant, efficiency of handover/reselection triggered based on signal quality alone is low. Therefore, a location-assisted handover/reselection enhancement technology is considered in NR or the NTN. For example, mobility management in the NTN network is implemented in a plurality of manners, for example, based on time or a timer, UE location information (for example, a distance between the UE and a reference point of a source cell is greater than a threshold 1, and a distance between the UE and a reference point of a target cell is less than a threshold 2), or a combination of a timer or a location and signal quality.

It can be learned from the foregoing descriptions that existing handover/reselection in the NR or the NTN is usually designed for handover/reselection actively triggered by a UE, and a source-target (Source-Target) base station topology is static. In the static topology, a transmission path between a source base station and a target base station is fixed, and has a large transmission capacity and a short transmission delay.

However, in an LEO scenario, in a mode in which group handover/reselection is mainly triggered by movement of a network-side device (for example, a satellite), operation efficiency is low. In addition, a topology between a source satellite and a target satellite is dynamic, and a transmission path may be long, leading to long mobility interruption time during handover and high signaling overheads.

In view of this, for the foregoing mobility management problem in the NTN network, embodiments of this application provide a communication method, to shorten mobility interruption time of a terminal device.

For ease of understanding embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In text descriptions of this application, the character "/" usually indicates an "or" relationship between associated objects. "At least one of the following items (pieces)" or a similar expression thereof indicates any combination of the items, including one of the items (pieces) or any combination of a plurality of the items (pieces). For example, at least one of a, b, and c may indicate a, b, c, a and b, a and c, b and c, or a, b, and c. a, b, and c each may be in a singular form or a plural form.

Third, in this application, "first", "second", and various numbers (for example, #1 and #2) are merely intended for distinguishing for ease of description, but not to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

Fourth, in this application, the terms "include", "have", and any variants thereof are intended to cover non-exclusive inclusion. For example, a process, method, system, product, or device that includes a series of steps or units is not necessarily limited to those clearly listed steps or units, but may include other steps or units that are not clearly listed or are inherent to the process, method, product, or device.

Fifth, in this application, "indicate" may include a direct indication and an indirect indication. When a piece of indication information indicates A, the indication information may directly indicate A or indirectly indicate A, but it does not indicate that the indication information definitely carries A.

An indication manner in embodiments of this application should be understood as covering various methods that can enable a to-be-indicated entity to learn of to-be-indicated information. The to-be-indicated information may be sent as a whole, or may be divided into a plurality of pieces of sub-information for separate sending. In addition, sending periodicities and/or sending occasions of the sub-information may be the same or different. A specific sending method is not limited in this application.

The "indication information" in embodiments of this application may be an explicit indication, to be specific, a direct indication through signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Sixth, in this application, a "protocol" may be a standard protocol in the communication field, for example, may include a 5G protocol, an NR protocol, and a related protocol used in a future communication system. This is not limited in this application. "Predefined" may include being defined in advance, for example, being defined in a protocol. "Preconfigure" may be implemented by prestoring corresponding code or a corresponding table on a device, or may be implemented in another manner of indicating related information. A specific implementation is not limited in this application.

Seventh, in this application, "store" may mean being stored in one or more memories. The one or more memories may be separately disposed, or may be integrated into an encoder, a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Eighth, in this application, "report", "feed back", and "send" may be interchanged if there is no logic conflict.

The following describes in detail the communication method provided in embodiments of this application with reference to the accompanying drawings. For example, the communication method may be applied to the communication system shown in FIG. 1.

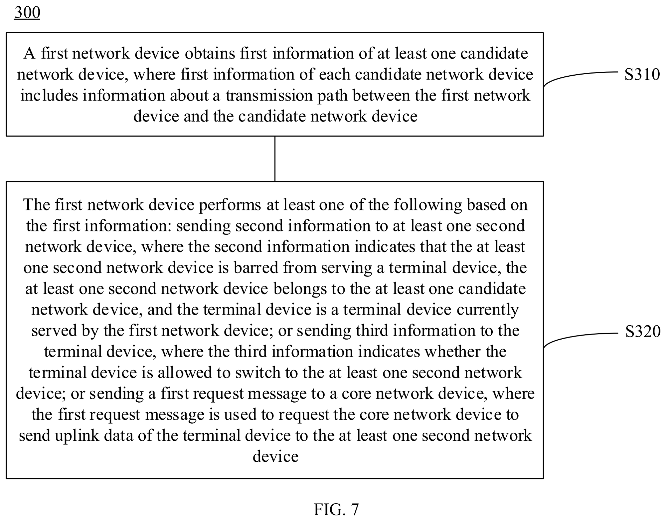

FIG. 7 is a diagram of a communication method 300 according to an embodiment of this application. As shown in FIG. 7, the method 300 includes the following steps.

S310: A first network device obtains first information of at least one candidate network device.

First information of each candidate network device includes information about a transmission path between the first network device and the candidate network device.

Specifically, the information about the transmission path between the first network device and the candidate network device includes one or more of the following: a specific transmission path between the first network device and the candidate network device, a hop count included in the transmission path, a delay of the transmission path, a distance of the transmission path, weight information corresponding to the transmission path, and the like. The weight information may correspond to a transmission cost, a transmission rate, a transmission priority, or the like of the path.

It should be understood that the first information can further include time information related to the transmission path between the first network device and the candidate network device.

The time information related to the transmission path between the first network device and the candidate network device includes one or more of the following: a timer, a validity time period, a time snapshot number, and the like.

It should be understood that a specific manner of obtaining the at least one candidate network device by the first network device is not limited in this embodiment of this application.

In a possible implementation, a network device #1 (an example of the first network device) sends a request message #1 to a network device #2 (an example of the candidate network device), and correspondingly, the network device #2 receives the request message #1.

The request message #1 may be used to request first information of the network device #2, or the request message #1 may be used to request the network device #2 to confirm first information of the network device #2. This is not limited in this embodiment of this application.

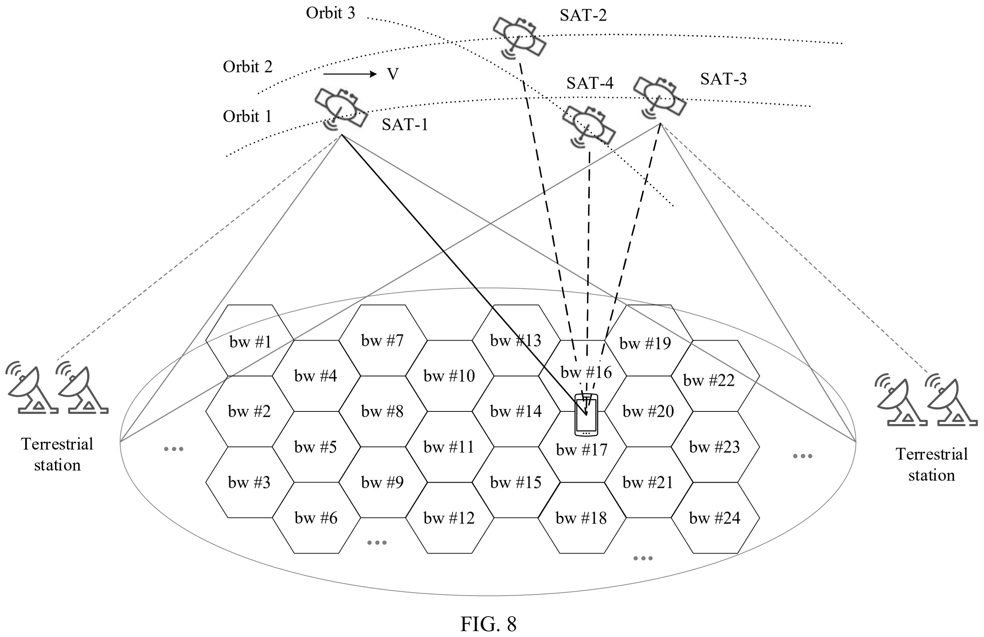

FIG. 8 is a diagram of a handover scenario according to an embodiment of this application. As shown in FIG. 7, in a geographic area bw #17, a source serving satellite of a UE is a SAT-1 (referred to as a satellite 1 below), and potential target satellites for handover are a satellite 2, a satellite 3, and a satellite 4. In this case, for information exchanged between a source-target satellite pair, refer to Table 1 below.

**Table 1 Information exchanged between a source-target satellite pair**

| Source-target satellite pair | Transmission path | Time |
|---|---|---|
| SAT-1 and SAT-2 | Path length: 2 SAT-1 → x1 → SAT-2 | [t1, t2] |
| SAT-1 and SAT-3 | Path length: 3 SAT-1 → y1 → y2 → SAT-3 | [t3, t4] |
| SAT-1 and SAT-4 | Path length: 20 SAT-1 → z1 → ... z19 → SAT-4 | [t5, t6] |

It should be noted that a terrestrial station node can also serve as a transit node between a source satellite node and a target satellite node of handover.

It should be understood that, in different time periods, a transmission path between the source satellite node and the target satellite node also changes, and the first information of the candidate network device is also updated correspondingly.

By way of example rather than limitation, within the time period [t1, t2], a transmission path between the satellite 1 and the satellite 2 is as follows: the satellite 1, x1, the satellite 2 (x1 may be a satellite node, a terrestrial station node, or the like). Within the time period [t3, t4], a transmission path between the satellite 1 and the satellite 2 is as follows: the satellite 1, x2, x3, the satellite 2 (x2 and x3 may be satellite nodes, terrestrial station nodes, or the like).

By way of example rather than limitation, time period information may alternatively be represented by coordinated universal time (UTC, Universal Coordinated Time), for example, [UTC_start, UTC_end] or [UTC_start, duration], where UTC_start, UTC_end, and duration are a start moment, an end moment, and an offset relative to the start moment respectively.

It should be understood that an interaction interface between the first network device and the candidate network device is not limited in this embodiment of this application.

In an example, an NGAP interface from a base station to a core network is reused as an interaction interface between the first network device and the candidate network device.

In another example, an X2AP interface, an XnAP interface, or the like between base stations may be reused as an interaction interface between the first network device and the candidate network device.

It should be understood that interaction interfaces between the first network device and a plurality of candidate network devices can be different. For example, an interaction interface between the network device #1 and a candidate network device #A is an NGAP interface, and an interaction interface between the network device #2 and a candidate network device #B is an X2AP or XnAP interface.

S320: The first network device performs at least one of the following based on the first information:
sending second information to at least one second network device, where the second information indicates that the at least one second network device is barred from serving a terminal device, the at least one second network device belongs to the at least one candidate network device, and the terminal device is a terminal device currently served by the first network device; or
sending third information to the terminal device, where the third information indicates whether the terminal device is allowed to switch to the at least one second network device; or
sending a first request message to a core network device, where the first request message is used to request the core network device to send uplink data of the terminal device to the at least one second network device.

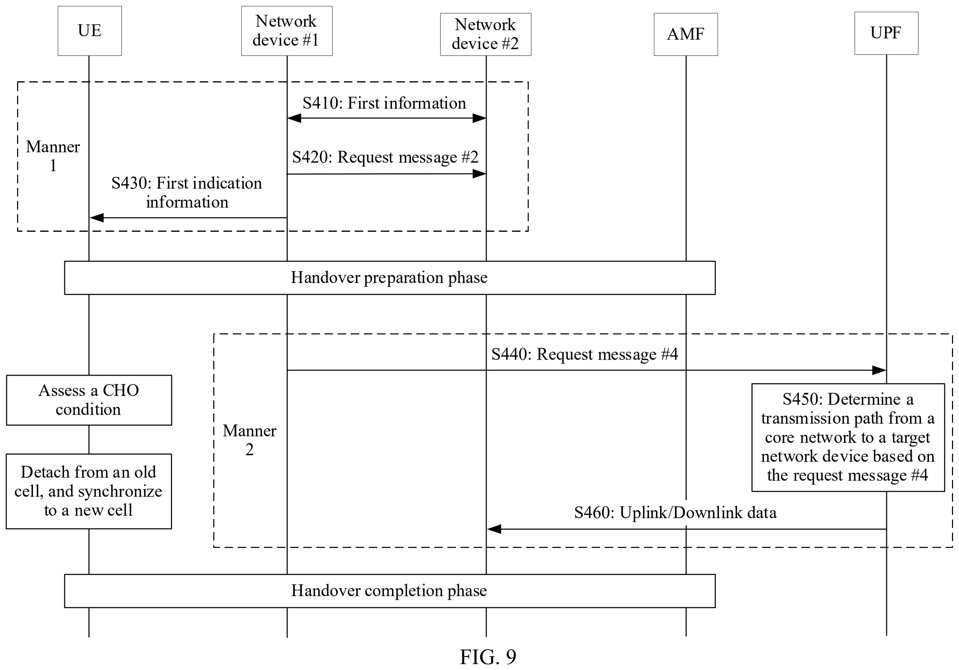

Specifically, with reference to FIG. 9 to FIG. 12, the following describes a specific process of performing, by the first network device, the foregoing actions based on the first information.

FIG. 9 is a diagram of a process 400 to which a communication method 300 provided in an embodiment of this application is applicable. As shown in FIG. 9, the process 400 includes the following steps.

S410: A network device #1 obtains first information of a network device #2.

It should be understood that the network device #1 further obtains first information (not shown in the figure) of at least one candidate network device, and the network device #2 (an example of a second network device) is one of one or more candidate network devices.

It should be understood that, for a specific manner of obtaining the first information of the network device #2 by the network device #1 and specific content of the first information, reference may be made to related descriptions of FIG. 7. Details are not described herein again.

The following describes, in two manners, a solution in which the network device #1 shortens mobility interruption time based on the first information of the network device #2.

### Manner 1

The network device #1 determines, based on the first information of the network device #2, a plan for a mobility management measurement-related current cell/neighboring cell measurement reference signal. The first information can be used to determine mobility management measurement-related current cell/neighboring cell measurement reference information, for example, a synchronization signal and physical broadcast channel block (synchronization signal and PBCH block, SSB), a channel state information reference signal (channel state information reference signal, CSI-RS), or a tracking reference signal (Tracking Reference Signal, TRS). This is not limited in this application.

In this implementation, the network device #1 determines the plan for the mobility management measurement-related current cell/neighboring cell measurement reference signal based on whether the first information of the network device #2 meets a first condition. The first condition may be preset. Specifically, when the first information of the network device #2 meets the first condition, the network device #1 performs the following step:

S420: Send a request message #2 to the network device #2, where the request message #2 is used to request to bar the network device #2 from serving a UE.

In a possible implementation, the request message #2 is used to request the network device #2 to stop sending a handover-related measurement reference signal to a first area within a first time period, where the request message #2 includes an identifier of the first time period and an identifier of the first area.

In another possible implementation, the request message #2 is used to request the network device #2 to send a message related to access barring (for example, an existing cell barred/restricted (Cell Barred) indication message is reused) to a first area within a first time period, where the request message #2 includes an identifier of the first time period and an identifier of the first area.

It should be understood that, in the foregoing implementations, the first area is an area served by the network device #1, and the terminal device is in the first area.

It should be understood that, in this embodiment of this application, determining whether the first information of the network device #2 meets the first condition is related to a parameter included in the first information.

By way of example rather than limitation, when information about a transmission path of the network device #2 includes a distance of a transmission path between the network device #1 and the network device #2, the first condition includes at least one of the following:
The distance of the transmission path between the network device #1 and the network device #2 is greater than or equal to a threshold #1, where the threshold #1 is (pre)configured.

The distance of the transmission path between the network device #1 and the network device #2 is ranked top M among distances of transmission paths between the network device #1 and a plurality of candidate target satellites, where M is a positive integer, and M may be preset.

The distance of the transmission path between the network device #1 and the network device #2 is greater than or equal to a threshold #1 and less than a threshold #2, where the threshold #1 and the threshold #2 are (pre)configured.

By way of example rather than limitation, when information about a transmission path of the network device #2 includes a hop count of a transmission path between the network device #1 and the network device #2, the first condition includes at least one of the following:
The hop count of the transmission path between the network device #1 and the network device #2 is greater than or equal to a threshold #3, where the threshold #3 is (pre)configured.

The hop count of the transmission path between the network device #1 and the network device #2 is ranked top N among hop counts of transmission paths between the network device #1 and a plurality of candidate target satellites, where N is a positive integer, and N may be preset.

The distance of the transmission path between the network device #1 and the network device #2 is greater than a threshold #3 and less than a threshold #4, where the threshold #3 and the threshold #4 are (pre)configured.

By way of example rather than limitation, when information about a transmission path of the network device #2 includes a delay of a transmission path between the network device #1 and the network device #2, the first condition includes at least one of the following:
The delay of the transmission path between the network device #1 and the network device #2 is greater than or equal to a threshold #5, where the threshold #5 is (pre)configured.

The delay of the transmission path between the network device #1 and the network device #2 is ranked top K among delays of transmission paths between the network device #1 and a plurality of candidate target satellites, where K is a positive integer, and K may be preset.

The distance of the transmission path between the network device #1 and the network device #2 is greater than a threshold #5 and less than a threshold #6, where the threshold #5 and the threshold #6 are (pre)configured.

By way of example rather than limitation, when information about a transmission path of the network device #2 includes a weight (for example, a transmission cost) of a transmission path between the network device #1 and the network device #2, the first condition includes at least one of the following:
The weight of the transmission path between the network device #1 and the network device #2 is greater than or equal to a threshold #7, where the threshold #7 is (pre)configured.

The delay of the transmission path between the network device #1 and the network device #2 is ranked top L among weights of transmission paths between the network device #1 and a plurality of candidate target satellites, where L is a positive integer, and L may be preset.

The distance of the transmission path between the network device #1 and the network device #2 is greater than a threshold #7 and less than a threshold #8, where the threshold #7 and the threshold #8 are (pre)configured.

It should be understood that, when the first information of the network device #2 includes the foregoing plurality of parameters, the first condition can be based on any one or more of the parameters included in the first information. This is not limited in this embodiment of this application.

By way of example rather than limitation, in FIG. 8, after a satellite 1 obtains first information of a satellite 4 and determines that a distance of a transmission path from the satellite 1 to the satellite 4 meets the first condition, the satellite 1 sends a scheduling request message to the satellite 4. The scheduling request message is used to request the satellite 4 to stop sending a handover-related measurement signal to an area bw #17 within the first time period.

According to the foregoing solution, the network device #1 can request a network device with a transmission path parameter greater than a threshold to stop sending a handover-related measurement signal to a service area of the network device #1, to prevent a terminal side from performing measurement on and selecting an inappropriate target satellite (for example, a distance of a transmission path is excessively long), and shorten mobility interruption time.

In another possible implementation, the network device #1 can alternatively adjust, based on the first information of the network device #2, mobility management-related configuration information to be sent to the UE, for example, adjust SSB-based measurement timing configuration (SSB-based measurement timing configuration, SMTC) information, or measurement configuration information based on a reference signal such as a CSI-RS or a TRS. Adjusting the SMTC configuration information is used below as an example for description. To be specific, when the first information of the network device #2 meets the first condition, the network device #1 performs the following step:
S430: The network device #1 sends first indication information (an example of third information) to the UE, and correspondingly, the UE receives the first indication information.

In this implementation, the first indication information indicates the UE to perform signal measurement based on a first periodicity, the first periodicity does not overlap a second periodicity, and the second periodicity is a transmission periodicity of a measurement reference signal of the network device #2.

By way of example rather than limitation, in FIG. 7, after the satellite 1 obtains the first information of the satellite 4 and determines that the distance of the transmission path from the satellite 1 to the satellite 4 meets the first condition, the satellite 1 sends third information to a UE in the area bw #17. The third information indicates the UE to perform signal measurement based on a periodicity #1, the periodicity #1 does not overlap a periodicity #2, and the periodicity #2 is a transmission periodicity of a measurement reference signal of the satellite 4.

It should be understood that the periodicity #1 and the periodicity #2 can be understood as time windows configured based on the SMTC information. To be specific, a time window in which the UE performs reference signal measurement does not include the measurement reference signal of the satellite 4.

Further, the UE performs signal measurement and cell handover based on the first indication information.

According to the foregoing solution, the network device #1 can adjust mobility management-related configuration information of the UE, to prevent the UE from performing measurement on and switching to an inappropriate target satellite (for example, a distance of a transmission path is excessively long), and shorten mobility interruption time.

### Manner 2

After receiving the first information of the network device #2, the network device #1 performs the following step:

S440: The network device #1 sends a request message #3 (an example of a first request message) to a core network device, and correspondingly, the core network device receives the request message #3.

The request message #3 is used to request the core network device to send uplink data and/or downlink data of a terminal device to the network device #2. For example, the request message #3 may be an early path switch request (Early path switch request) message, and the core network device may be a user plane network function (User Plane Function, UPF), an access and mobility management function (Access and Mobility management Function, AMF), or the like.

Specifically, the request message #3 includes an identifier of one or more network devices, a second time period, and the first information of the network device #2. The one or more network devices include the network device #2. An example in which the request message #3 includes only an identifier of the network device #2 is used below for description.

It should be noted that the second time period is included in a conditional handover (Conditional Handover, CHO) time period of the UE. More specifically, the second time period is before a moment at which the UE accesses the network device #2 (for example, before step S212 shown in FIG. 6).

It should be understood that the uplink/downlink data of the UE is uplink data and/or downlink data sent by the UE to the network device #1 before the second time period.

It should be understood that step S410 is performed before or during a handover preparation phase, and step S440 is performed in a handover execution phase.

S450: The core network device determines a transmission path from the core network device to the network device #2 based on the request message #3.

Specifically, the core network device first needs to determine the transmission path from the core network device to the network device #2 based on the identifier of the network device #2 in the request message #3 and the first information of the network device #2.

It should be understood that the transmission path between the core network device and the network device #2 can pass or may not pass the network device #1. This is not limited in this embodiment of this application.

S460: The core network device sends the uplink/downlink data of the UE to the network device #2. Correspondingly, the network device #2 receives the uplink data and/or the downlink data of the UE.

Specifically, the core network device sends the uplink data and/or the downlink data of the UE to the network device #2 within the second time period through the transmission path from the core network device to the network device #2.

It should be noted that, in the manner 2, whether the network device #1 determines a relationship between the first information of the network device #2 and a first condition after obtaining the first information of the network device #2 is not limited in this embodiment of this application. In other words, the network device #1 can send the request message #3 only when the first information of the network device #2 meets the first condition, or the network device #1 can send first information of all obtained candidate network devices to the core network device without performing determining based on the first condition.

According to the foregoing solution, before a served UE switches to a target cell, the network device #1 sends obtained transmission path-related information of the target cell to the core network device, and requests the core network device to send uplink data and/or downlink data of the UE to the target cell before the UE switches to the target cell, instead of sending the uplink data and/or the downlink data of the UE to the target cell through the network device #1 after the handover is completed, to shorten mobility interruption time.

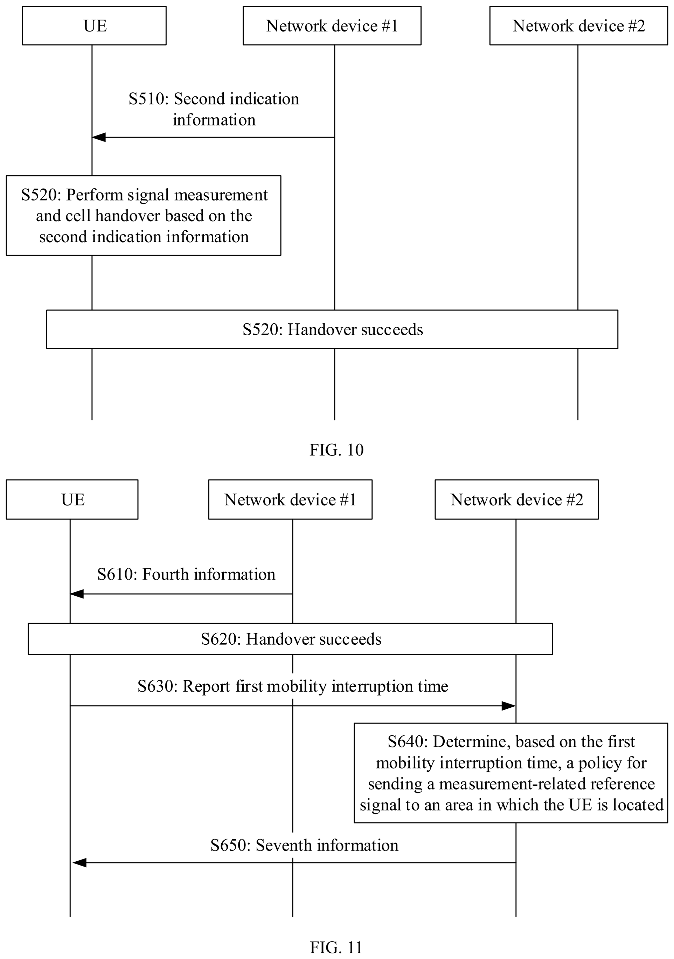

FIG. 10 is a diagram of a process 500 to which a communication method 300 provided in an embodiment of this application is applicable. As shown in FIG. 10, the process 500 includes the following steps.

S510: A network device #1 sends second indication information (another example of third information) to a UE, where the second indication information indicates the UE to perform signal measurement based on a priority of a candidate network device. Correspondingly, the UE receives the second indication information.

The second indication information includes a priority of at least one network device pair, and each network device pair includes one candidate network device. It should be understood that, in this embodiment of this application, a priority of each network device pair has a same meaning as a priority of each candidate network device, and the two expressions can be interchanged.

It should be understood that the at least one network device pair is a source-target satellite pair. To be specific, each network device pair includes the network device #1 and one candidate network device.

It should be understood that, before sending the second indication information, the network device #1 obtains first information of at least one candidate network device, to determine the priority of each candidate network device. For a specific process of obtaining, by the network device #1, the first information of the at least one candidate network device, refer to related descriptions of the method 300. Details are not described herein again.

It should be noted that, in this implementation, in addition to the foregoing content, the first information of the candidate network device further includes at least one of the following: an orbit height of the candidate network device, a type of the candidate network device, and an orbit type of the candidate network device.

In this embodiment of this application, the network device #1 determines the priority of each network device pair based on one or more of the following: an orbit type, a length of a transmission path, and a link type.

For example, at a same frequency, that both satellites are in an ascending pass or a descending pass corresponds to a high priority, and that one satellite is in an ascending pass and another satellite is in a descending pass corresponds to a low priority. A satellite in an ascending pass is a satellite moving from south to north. For example, a velocity component Vz of the satellite on a z-axis in an earth-centered, earth-fixed (ECEF, Earth centered earth fixed) coordinate system is greater than 0. A satellite in a descending pass is a satellite moving from north to south. For example, a velocity component Vz of the satellite on the z-axis in the earth-centered, earth-fixed ECEF coordinate system is less than 0.

For example, a short transmission path corresponds to a high priority, and a long transmission path corresponds to a low priority. For a manner of determining a distance of a transmission path, refer to the method 300. Details are not described herein again.

For example, an intra-plane inter-satellite link corresponds to a high priority, a satellite-earth link corresponds to a high priority, and an inter-plane inter-satellite link corresponds to a low priority.

With reference to FIG. 8, Table 2 shows a priority configuration manner for a network device pair.

**Table 2 Priority configuration manner for a network device pair**

| Source-target satellite pair | Priority | Time |
|---|---|---|
| SAT-1 and SAT-2 | 3 | [t1, t2] |
| SAT-1 and SAT-3 | 5 | [t1, t2] |
| SAT-1 and SAT-4 | 1 | [t1, t2] |

A priority of a network device pair including the satellite 1 and the satellite 2 is 3. A priority of a network device pair including the satellite 1 and the satellite 3 is 5. A priority of a network device pair including the satellite 1 and the satellite 4 is 1. It is easily understood that, in Table 2, a larger priority value indicates a higher priority of a network device pair.

It should be noted that a correspondence between a priority value and a priority is not limited in this embodiment of this application.

S520: The UE performs signal measurement and cell handover based on the second indication information.

Specifically, the UE preferentially performs measurement on a candidate network device with a high priority. If handover decision succeeds, the UE switches to the candidate network device.

If a candidate network device with a highest priority fails handover decision, the UE performs measurement on a candidate network device in a network device pair with a second highest priority, and so on.

In other words, in step S520, the UE performs measurement on candidate network devices in descending order of priorities of the at least one network device pair, and the UE performs measurement on an adjacent candidate network device with a low priority only when a candidate network device with a high priority fails handover decision.

It should be noted that the process 500 can be used separately from or in combination with the process 400. This is not limited in this embodiment of this application.

According to the foregoing solution, the network device #1 indicates the priority of the at least one network device pair to the UE, so that the UE can sequentially perform measurement on candidate network devices in descending order of priorities, to prevent the UE from performing measurement on and accessing an inappropriate candidate network device (for example, the UE switches between a satellite in an ascending pass and a satellite in a descending pass).

FIG. 11 is a diagram of a process 600 to which a communication method 300 provided in an embodiment of this application is applicable. As shown in FIG. 11, the process 600 includes the following steps.

S610: A network device #1 sends fourth information to a UE, where the fourth information is used to configure a reporting manner and a reporting resource for first mobility interruption time.

It should be understood that the first mobility interruption time is mobility interruption time in a process in which the UE switches from the network device #1 to another network device (for example, a network device #2).

Correspondingly, the UE receives the fourth information from the network device #1.

The fourth information includes a first reporting manner and a second resource, and the second resource is used to report the mobility interruption time.

It should be understood that a specific reporting manner for the mobility interruption time is not limited in this embodiment of this application.

In a possible implementation, the first reporting manner is that the UE reports the mobility interruption time when the mobility interruption time meets a second condition.

For example, the second condition is that the UE successfully performs handover between networks (for example, the UE successfully switches from the network device #1 to the network device #2) and the mobility interruption time is greater than a threshold #8 (an example of a fourth threshold). In other words, the UE reports the mobility interruption time only when the UE successfully performs network handover and the mobility interruption time is greater than a given threshold.

It should be understood that a specific value of the threshold #8 is not limited in this embodiment of this application. In an example, the threshold #8 is 100 ms. In another example, the threshold #8 is 1s. The threshold #8 may be preset.

In a possible implementation, the first reporting manner is that the UE periodically reports the mobility interruption time based on a first reporting periodicity. A reporting periodicity of the UE can be configured based on frequency of handover of the UE between network devices.

It should be understood that a specific length of a periodicity at which the UE reports the mobility interruption time is not limited in this embodiment of this application. In an example, the first reporting periodicity is 5s. In another example, the first reporting periodicity is 200s.

It should be understood that the fourth information indicates one or more of the following information of the second resource: a time resource, a frequency resource, a polarization resource, a beam resource, and the like.

S620: The UE successfully switches from the network device #1 to the network device #2.

S630: The UE reports the first mobility interruption time to the network device #2.

Specifically, the UE reports the mobility interruption time to the network device #2 on the second resource according to the first reporting manner indicated by the fifth information.

By way of example rather than limitation, after the UE switches to the network device #2, the UE reports the mobility interruption time if determining that the second condition is met.

By way of example rather than limitation, after the UE switches to the network device #2, the UE reports the mobility interruption time to the network device #2 based on the first reporting periodicity.

It should be understood that a specific manner of reporting the mobility interruption time by the UE is not limited in this embodiment of this application.

In an example, the UE can report a specific value of the mobility interruption time.

In another example, the UE can report a level corresponding to the mobility terminal time. Specifically, the UE can indicate the level of the mobility interruption time by using 1 bit. To be specific, the UE determines, based on whether the specific value of the mobility interruption time is greater than a third threshold, the level corresponding to the mobility interruption time; and reports, by using 0 or 1, the level corresponding to the mobility interruption time. The third threshold may be preset.

S640: The network device #2 determines, based on the first mobility interruption time, a policy for sending a measurement-related reference signal to an area in which the UE is located.

By way of example rather than limitation, when the mobility interruption time reported by the UE is less than a threshold #8, the network device #2 sends a handover-related measurement reference signal to the area in which the UE is located. Alternatively, when the mobility interruption time reported by the UE is greater than the threshold #8, the network device #2 sends information related to access barring to the area in which the UE is located.

By way of example rather than limitation, in FIG. 8, when a probability that mobility interruption time of a UE within a range of an area bw #17 is greater than the threshold #8 is less than a threshold #9 (an example of a sixth threshold), the network device #2 sends a handover-related measurement reference signal to the area bw #17. Alternatively, when the probability that the mobility interruption time of the UE within the range of the area bw #17 is greater than the threshold #8 is greater than the threshold #9, the network device #2 sends information related to access barring to the area bw #17.

S650: The network device #2 sends seventh information to the UE, where the seventh information is used to configure a reporting manner and a reporting resource for second mobility interruption time.

It should be understood that the second mobility interruption time is mobility interruption time in a process in which the UE switches from the network device #2 to another network device.

It should be understood that the network device #2 can first perform step S640 or S650, or the network device #2 can simultaneously perform steps S640 and S650. This is not limited in this embodiment of this application.

It should be noted that the process 600 can be used separately from or in combination with at least one of the process 400 and the process 500. This is not limited in this embodiment of this application.

According to the foregoing solution, the network device #2 receives mobility interruption time from at least one terminal device in a same area, and when the mobility interruption time of the terminal device in the area is excessively long, stops sending handover-related measurement information to the area in which the UE is located, or sends access barring indication information to the area in which the UE is located.

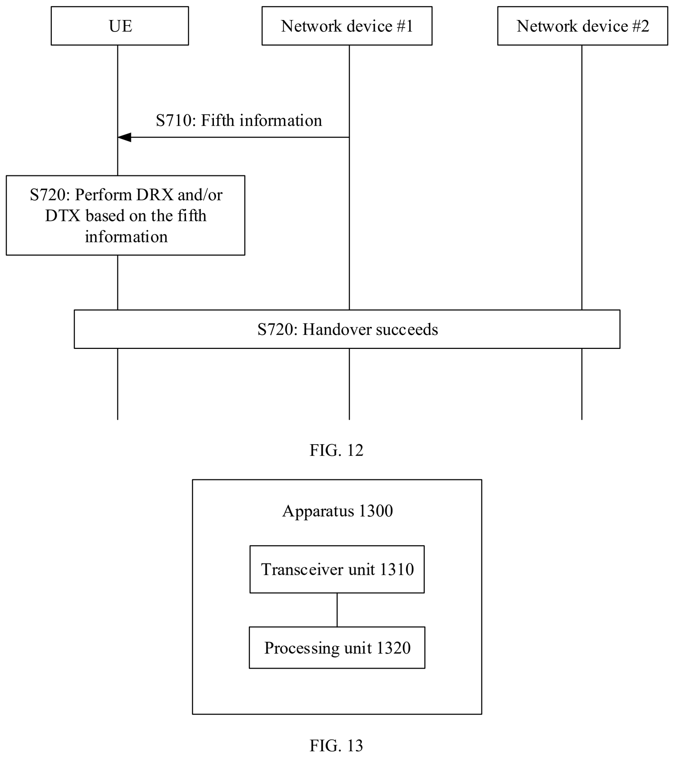

FIG. 12 is a diagram of a process 700 to which a communication method 300 provided in an embodiment of this application is applicable. As shown in FIG. 12, the process 700 includes the following steps.

S710: A network device #1 sends fifth information to a UE, where the fifth information indicates a third time period, and the UE performs discontinuous reception DRX and/or discontinuous transmission DTX within the third time period.

Correspondingly, the UE receives the fifth information from the network device #1.

It should be understood that the third time period is all or a part of time periods of the UE during cell handover/reselection.

It should be understood that a specific manner of indicating the third time period by the network device #1 is not limited in this embodiment of this application.

In a possible implementation, the fifth information includes one or more pieces of time period information. By way of example rather than limitation, the second indication information includes MIT-DRX [t1, t2], MIT-DTX [t3, t4], and MIT-DRX/MIT-DTX [t5, t6]. The MIT-DRX [t1, t2] indicates the UE to stop receiving a signal within the time period [t1, t2]. The MIT-DTX [t3, t4] indicates the UE to stop sending a signal within the time period [t3, t4]. The MIT-DRX/MIT-DTX [t5, t6] indicates the UE to stop receiving and sending a signal within the time period [t5, t6].

In another possible implementation, the fifth information includes a first moment and first duration, and the first duration can be discontinuous reception DRX duration and/or discontinuous transmission DTX duration.

By way of example rather than limitation, the first moment is a moment at which the UE returns handover response completion to the network device #2 (for example, a moment at which an RRC reconfiguration complete is sent), and the first duration is 1s. To be specific, the UE stops sending a signal within 1s after a moment at which the UE sends a handover response.

By way of example rather than limitation, the first moment is a moment at which the network device #2 returns a RACH response to the UE (for example, a moment at which an MSG2 is returned), and the first duration is 800 ms. To be specific, the UE stops receiving a signal within 800 ms after a moment at which the MSG2 is received from a network.

S720: The UE performs DRX and/or DTX based on the fifth information.

Specifically, the UE enters a sleep state (sleep mode) based on the third time period, and the UE does not monitor a PDCCH, and does not send data and/or receive data.

It should be noted that the process 700 can be used separately from or in combination with at least one of the process 400, the process 500, and the process 600. This is not limited in this embodiment of this application.

According to the foregoing solution, the UE can stop receiving data and/or sending data within the third time period configured by the network device #1, to reduce energy overheads within mobility interruption time.

The foregoing describes the method embodiments in embodiments of this application with reference to the accompanying drawings. The following describes apparatus embodiments in embodiments of this application. It can be understood that the descriptions of the method embodiments and the descriptions of the apparatus embodiments may correspond to each other. Therefore, for a part that is not described, refer to the foregoing method embodiments.

It can be understood that, in the foregoing method embodiments, the methods and the operations implemented by the terminal device may alternatively be implemented by a component (for example, a chip or a circuit) that may be used in the terminal device, and the methods and the operations implemented by the network device may alternatively be implemented by a component (for example, a chip or a circuit) that may be used in the network device.

The foregoing mainly describes the solutions provided in embodiments of this application from a perspective of interaction between network elements. It can be understood that, to implement the foregoing functions, each network element, for example, a transmit-end device or a receive-end device, includes corresponding hardware structures and/or software modules for performing the functions. A person skilled in the art may be aware that units and algorithm steps in examples described with reference to embodiments disclosed in this specification can be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application. However, it should not be considered that the implementation goes beyond the scope of this application.

In embodiments of this application, the transmit-end device or the receive-end device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that division into the modules in embodiments of this application is an example, and is merely logical function division. During actual implementation, another division manner may be used. An example in which each functional module is obtained through division based on a corresponding function is used below for description.

FIG. 13 is a diagram of a structure of a communication apparatus according to an embodiment of this application.

The apparatus 1300 includes a transceiver unit 1310 and a processing unit 1320. The transceiver unit 1310 may be configured to implement a corresponding communication function, and the processing unit 1320 may be configured to perform data processing.

Optionally, the transceiver unit 1310 may also be referred to as a communication interface or a communication unit, and includes a sending unit and/or a receiving unit. The transceiver unit 1310 may be a transceiver (including a transmitter and/or a receiver), an input/output interface (including an input interface and/or an output interface), a pin, a circuit, or the like. The transceiver unit 1310 may be configured to perform a sending step and/or a receiving step in the foregoing method embodiments.

Optionally, the processing unit 1320 may be a processor (which may include one or more processors), a processing circuit with a processor function, or the like, and may be configured to perform a step other than sending and receiving in the foregoing method embodiments.

Optionally, the apparatus 1300 further includes a storage unit. The storage unit may be a memory, an internal storage unit (for example, a register or a cache), an external storage unit (for example, a read-only memory or a random access memory), or the like. The storage unit is configured to store instructions. The processing unit 1320 executes the instructions stored in the storage unit, to enable the communication apparatus to perform the foregoing methods.

In a design, the apparatus 1300 may correspond to the network device (for example, the first network device or the second network device) in the foregoing method embodiments, or may be a component (for example, a chip) of the network device.

The apparatus 1300 may implement the steps or the processes performed by the terminal device in the foregoing method embodiments. The transceiver unit 1310 may be configured to perform a sending/receiving-related operation performed by the terminal device in the foregoing method embodiments. The processing unit 1320 may be configured to perform a processing-related operation performed by the terminal device in the foregoing method embodiments.

In a possible implementation, the transceiver unit 1310 is configured to obtain first information of at least one candidate network device, where first information of each candidate network device includes information about a transmission path between the first network device and the candidate network device. The processing unit 1320 is configured to perform at least one of the following based on the first information: sending second information to at least one second network device, where the second information indicates that the at least one second network device is barred from serving a terminal device, the at least one second network device belongs to the at least one candidate network device, and the first network device is a serving network device of the terminal device; or sending third information to the terminal device, where the third information indicates whether the terminal device is allowed to switch to the at least one second network device; or sending a first request message to a core network device, where the first request message is used to request the core network device to send uplink data of the terminal device to the at least one second network device.

In another possible implementation, the transceiver unit 1310 is configured to obtain first information of a first network device, where the first information includes information about a transmission path between a second network device and the first network device. The transceiver unit 1310 is further configured to receive second information from the first network device, where the second information indicates that the second network device is barred from serving a terminal device, and the first network device is a serving network device of the terminal device. The processing unit 1320 is configured to send measurement reference information based on the second information.

When the apparatus 1300 is configured to perform the methods in FIG. 7 to FIG. 12, the transceiver unit 1310 may be configured to perform an information sending/receiving step in the methods, and the processing unit 1320 may be configured to perform a processing step in the methods.

It should be understood that specific processes of performing the foregoing corresponding steps by the units are described in detail in the foregoing method embodiments. For brevity, details are not described herein again.

In another design, the apparatus 1300 may correspond to the terminal device in the foregoing method embodiments, or may be a component (for example, a chip) of the terminal device.

In a possible implementation, the transceiver unit 1310 is configured to receive third information from a first network device, where the third information indicates whether a terminal device is allowed to switch to at least one second terminal device, and the first network device is a current serving network device of the terminal device. The processing unit 1320 is configured to perform cell handover based on the third information.

When the apparatus 1300 is configured to perform the methods in FIG. 7 to FIG. 12, the transceiver unit 1310 may be configured to perform an information sending/receiving step in the methods, and the processing unit 1320 may be configured to perform a processing step in the methods.

It should be understood that specific processes of performing the foregoing corresponding steps by the units are described in detail in the foregoing method embodiments. For brevity, details are not described herein again.

It should be further understood that the apparatus 1300 herein is embodied in a form of a functional unit. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described functions. In an optional example, a person skilled in the art can understand that the apparatus 1300 may be specifically the network device in the foregoing embodiments, and may be configured to perform the processes and/or the steps corresponding to the network device in the foregoing method embodiments. To avoid repetition, details are not described herein again.

The apparatus 1300 in the foregoing solutions has a function of implementing corresponding steps performed by a device (for example, the terminal device and the network device) in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform sending/receiving operations and related processing operations in the method embodiments.

In addition, the transceiver unit 1310 may alternatively be a transceiver circuit (for example, may include a receiver circuit and a transmitter circuit), and the processing unit may be a processing circuit.

It should be noted that the apparatus in FIG. 13 may be a network element or a device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit that is integrated in the chip. This is not limited herein.

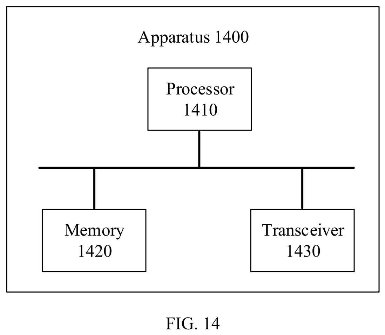

FIG. 14 is a diagram of a structure of a communication apparatus 1400 according to an embodiment of this application. The communication apparatus 1400 shown in FIG. 14 includes a processor 1410, a memory 1420, and a transceiver 1430. The processor 1410 is coupled to the memory 1420, and is configured to execute instructions stored in the memory 1420, to control the transceiver 1430 to send a signal and/or receive a signal.

It should be understood that the processor 1410 and the memory 1420 may be integrated into one processing apparatus, and the processor 1410 is configured to execute program code stored in the memory 1420 to implement the foregoing functions. During specific implementation, the memory 1420 may alternatively be integrated into the processor 1410 or independent of the processor 1410. It should be understood that the processor 1410 may alternatively correspond to each processing unit in the foregoing communication apparatus, and the transceiver 1430 may correspond to each receiving unit and sending unit in the foregoing communication apparatus.

It should be further understood that the transceiver 1430 may include a receiver (or referred to as a receiver device) and a transmitter (or referred to as a transmitter device). The transceiver may further include an antenna, and there may be one or more antennas. The transceiver may alternatively be a communication interface or an interface circuit.

Specifically, the communication apparatus 1400 may correspond to a device (the terminal device or the network device) in FIG. 7 to FIG. 12 according to embodiments of this application. The communication apparatus 1400 may include a unit for performing the method performed by the terminal device in FIG. 7 to FIG. 12, or a unit for performing the method performed by the first network device, or a unit for performing the method performed by the second network device. It should be understood that specific processes of performing the foregoing corresponding steps by the units are described in detail in the foregoing method embodiments. For brevity, details are not described herein again.

When the communication apparatus 1400 is a chip, the chip includes an interface unit and a processing unit. The interface unit may be an input/output circuit or a communication interface. The processing unit may be a processor, a microprocessor, or an integrated circuit that is integrated in the chip.

During implementation, the steps of the foregoing methods may be performed by a hardware integrated logic circuit in the processor or instructions in a form of software. The steps of the methods disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and performs the steps of the foregoing methods based on hardware of the processor. To avoid repetition, details are not described herein again.

It should be noted that the processor in embodiments of this application may be an integrated circuit chip and has a signal processing capability. During implementation, the steps in the foregoing method embodiments may be performed by a hardware integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or transistor logic device, or a discrete hardware component, and may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and performs the steps of the foregoing methods based on hardware of the processor.

This application further provides a computer-readable medium that stores a computer program. When the computer program is executed by a computer, functions in any one of the foregoing method embodiments are implemented.

This application further provides a computer program product. When the computer program product is executed by a computer, functions in any one of the foregoing method embodiments are implemented.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer instructions are loaded and executed on a computer, all or some of the processes or the functions according to embodiments of this application are produced. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of this application.

It can be clearly understood by a person skilled in the art that, for ease and brevity of description, for detailed working processes of the foregoing systems, apparatuses, and units, reference may be made to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk drive, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

The terms "component", "module", and "system" and the like used in this specification indicate a computer-related entity, hardware, firmware, a combination of hardware and software, software, or software being executed. For example, a component may be, but is not limited to, a process that is run on a processor, a processor, an object, an executable file, an execution thread, a program, and/or a computer. As illustrated by using figures, both a computing device and an application that is run on the computing device may be components. One or more components may reside in a process and/or an execution thread, and a component may be located on one computer and/or distributed between two or more computers. In addition, these components may be executed from various computer-readable media that store various data structures. For example, the component may perform communication through a local process and/or a remote process based on a signal with one or more data packets (for example, data from two components that interact with another component in a local system, a distributed system, and/or a network, for example, an internet that interacts with another system through a signal).

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of this application.

## Claims

1. A communication method, comprising:
obtaining, by a first network device, first information of at least one candidate network device, wherein first information of each candidate network device comprises information about a transmission path between the first network device and the candidate network device; and
performing, by the first network device, at least one of the following based on the first information:
sending second information to at least one second network device, wherein the second information indicates that the at least one second network device is barred from serving a terminal device, the at least one second network device belongs to the at least one candidate network device, and the first network device is a serving network device of the terminal device; or
sending third information to the terminal device, wherein the third information indicates whether the terminal device is allowed to switch to the at least one second network device; or
sending a first request message to a core network device, wherein the first request message is used to request the core network device to send uplink data of the terminal device to the at least one second network device.

2. The method according to claim 1, wherein sending the second information to the at least one second network device or sending the third information to the terminal device based on the first information further comprises:
determine the at least one second network device based on the first information and a first condition.

3. The method according to claim 2, wherein the first information of the candidate network device comprises a distance of the transmission path between the first network device and the candidate network device, and the first condition comprises:
a distance of a transmission path between the second network device and the first network device is greater than a first threshold; and/or
the distance of the transmission path between the second network device and the first network device is ranked top M among distances of transmission paths between the first network device and the at least one candidate network device, wherein M is a positive integer.

4. The method according to claim 2, wherein the first information of the candidate network device comprises a hop count of the transmission path between the first network device and the candidate network device, and the first condition comprises:
a hop count of a transmission path between the second network device and the first network device is greater than a second threshold; and/or
the hop count of the transmission path between the second network device and the first network device is ranked top N among distances of transmission paths between the first network device and the at least one candidate network device, wherein N is a positive integer.

5. The method according to claim 2, wherein the first information of the candidate network device comprises a delay of the transmission path between the first network device and the candidate network device, and the first condition comprises:
a delay of a transmission path between the second network device and the first network device is greater than a third threshold; and/or
the delay of the transmission path between the second network device and the first network device is ranked top K among distances of transmission paths between the first network device and the at least one candidate network device, wherein K is a positive integer.

6. The method according to any one of claims 1 to 5, wherein the second information comprises an identifier of a first time period and an identifier of a first area, the second information indicates the second network device to stop sending a measurement reference signal to the first area within the first time period, and the first area is an area in which the terminal device is located.

7. The method according to any one of claims 1 to 6, wherein the third information comprises an identifier of a first periodicity, the third information indicates the terminal device to perform signal measurement based on the first periodicity, the first periodicity does not overlap a second periodicity, and the second periodicity is a transmission periodicity of a measurement reference signal of the second network device.

8. The method according to any one of claims 1 to 7, wherein the information about the transmission path between the first network device and the candidate network device comprises one or more of the following:
an orbit height of the candidate network device, a type of the candidate network device, and an orbit type of the candidate network device.

9. The method according to claim 8, wherein the third information comprises a priority of the at least one candidate network device, the third information indicates the terminal device to perform signal measurement based on the priority of the at least one candidate network, and a priority of each candidate network device is determined based on at least one of the following:
orbit types of the first network device and the candidate network device, a distance between the first network device and the candidate network device, and a type of a link between the first network device and the candidate network device.

10. The method according to any one of claims 1 to 9, wherein the method further comprises:
sending, by the first network device, fourth information to the terminal device, wherein the fourth information indicates the terminal device to report mobility interruption time based on the second periodicity; or
the fourth information indicates the terminal device to report the mobility interruption time when the mobility interruption time is greater than a fourth threshold.

11. The method according to any one of claims 1 to 10, wherein the first request message comprises an identifier of the second network device, a second time period, and the first information, and the second time period is a time period in which the terminal device performs handover.

12. The method according to any one of claims 1 to 11, wherein the method further comprises:
sending, by the first network device, fifth information to the terminal device, wherein the fifth information indicates one or more third time periods, and the third time period is a time period in which the terminal device is allowed to receive data and/or send data.

13. The method according to any one of claims 1 to 9, wherein first information of a candidate network device further comprises time information corresponding to information about a transmission path between the first network device and the candidate network device.

14. A communication method, comprising:
receiving, by a terminal device, third information from a first network device, wherein the third information indicates whether the terminal device is allowed to switch to at least one second terminal device, and the first network device is a current serving network device of the terminal device; and
performing, by the terminal device, cell handover based on the third information.

15. The method according to claim 14, wherein the third information comprises an identifier of a first periodicity, the third information indicates the terminal device to perform signal measurement based on the first periodicity, the first periodicity does not overlap a second periodicity, and the second periodicity is a transmission periodicity of a measurement reference signal of the second network device.

16. The method according to claim 14 or 15, wherein the third information comprises a priority of the at least one candidate network device, and the third information indicates the terminal device to perform signal measurement based on the priority of the at least one candidate network device.

17. The method according to any one of claims 14 to 16, wherein the method further comprises:
receiving, by the terminal device, fourth information from the first network device, wherein the fourth information indicates the terminal device to report mobility interruption time based on the second periodicity; or
the fourth information indicates the terminal device to report the mobility interruption time when the mobility interruption time is greater than a fourth threshold; and
reporting, by the terminal device, the mobility interruption time based on the fourth information.

18. The method according to any one of claims 14 to 17, wherein the method further comprises:
receiving, by the terminal device, fifth information from the first network device, wherein the fifth information indicates one or more third time periods, and the third time period is a time period in which the terminal device is allowed to receive data and/or send data.

19. A communication method, comprising:
obtaining, by a second network device, first information of a first network device, wherein the first information comprises information about a transmission path between the second network device and the first network device;
receiving, by the second network device, second information from the first network device, wherein the second information indicates that the second network device is barred from serving a terminal device, and the first network device is a serving network device of the terminal device; and
sending, by the second network device, measurement reference information based on the second information.

20. The method according to claim 19, wherein the second information comprises an identifier of a first time period and an identifier of a first area, the second information indicates the second network device to stop sending a measurement reference signal to the first area within the first time period, and the first area is an area in which the terminal device is located.

21. The method according to claim 20, wherein sending, by the second network device, the measurement reference information based on the second information comprises:
stopping, by the second network device based on the second information, sending a measurement reference signal to the first area within the first time period.

22. The method according to claim 19, wherein the second information comprises an identifier of a first time period and an identifier of a first area, the second information indicates the second network device to send eighth information to the first area within the first time period, the eighth information indicates that access of the terminal device is barred, and the first area is an area in which the terminal device is located.

23. The method according to claim 22, wherein sending, by the second network device, the measurement reference information based on the second information comprises:
sending, by the second network device, the eighth information to the first area within the first time period based on the second information.

24. A communication method, comprising:
receiving, by a second network device, fourth information from at least one terminal device, wherein the fourth information indicates mobility interruption time during handover of the terminal device to the second network device, and the at least one terminal device is in a same area; and determining, by the second network device based on the mobility interruption time, a policy for sending a measurement reference signal to the area.

25. The method according to claim 24, wherein determining, by the second network device based on the mobility interruption time, the policy for sending the measurement reference signal to the area comprises:
when the mobility interruption time reported by a terminal device is greater than a fourth threshold, stopping, by the second network device, sending the measurement reference signal to the area; or sending eighth information to the area, wherein the eighth information indicates that access of the terminal device is barred.

26. The method according to claim 24, wherein determining, by the second network device based on the mobility interruption time, the policy for sending the measurement reference signal to the area comprises:
when a quantity of terminal devices with mobility terminal time greater than a fourth threshold in a same area is greater than a sixth threshold, stopping, by the second network device, sending the measurement reference signal to the area; or sending eighth information to the area, wherein the eighth information indicates that access of the terminal devices is barred.

27. A communication method, comprising:
obtaining, by a first network device, first information of at least one candidate network device, wherein first information of the candidate network device comprises information about a transmission path between the first network device and the candidate network device; and
sending, by the first network device, a first request message to a core network device based on the first information, wherein the first request message is used to request the core network device to send uplink data of the terminal device to the at least one second network device, and the at least one second network device belongs to the at least one candidate network device.

28. The method according to claim 27, wherein the information about the transmission path between the first network device and the candidate network device comprises one or more of the following:
a specific transmission path between the first network device and the candidate network device, a hop count comprised in the transmission path, a delay of the transmission path, a distance of the transmission path, or weight information corresponding to the transmission path, wherein the weight information comprises at least one of a transmission cost, a transmission rate, or a transmission priority of the transmission path.

29. A communication method, comprising:
receiving, by a core network device, a first request message from a first network device, wherein the first request message is used to request the core network device to send uplink data of a terminal device to the at least one second network device; and
sending, by the core network device, the uplink data of the terminal device to the second network device based on the first request message.

30. The method according to claim 29, wherein the first request message comprises an identifier of the second network device, a second time period, and first information, the second time period is a time period in which the terminal device performs handover, and the first information comprises information about a transmission path between the first network device and the second network device; and
sending, by the core network device, the uplink data of the terminal device to the at least one second network device based on the first request message comprises:
determining, by the core network device, a transmission path from the core network device to the second network device based on the first request message; and
sending, by the core network device, the uplink data of the terminal device to the second network device within the second time period based on the transmission path from the core network device to the second network device.

31. The method according to claim 30, wherein the information, comprised in the first information, about the transmission path between the first network device and the second network device comprises one or more of the following:
a specific transmission path, a hop count comprised in the transmission path, a delay of the transmission path, and weight information corresponding to the transmission path.

32. A communication apparatus, wherein the communication apparatus comprises a unit or a module for performing the method according to any one of claims 1 to 13, claims 14 to 18, claims 19 to 23, claims 24 to 26, claim 27 or 28, or claims 29 to 31.

33. A communication apparatus, comprising:
a processor, wherein the processor is coupled to a memory, and the processor is configured to invoke computer program instructions stored in the memory, to perform the method according to any one of claims 1 to 13, or the method according to any one of claims 14 to 18, or the method according to any one of claims 19 to 23, or the method according to any one of claims 24 to 26, or the method according to claim 27 or 28, or the method according to any one of claims 29 to 31.

34. A chip, comprising a processor and a communication interface, wherein the communication interface is configured to receive data and/or information and transmit the received data and/or information to the processor, and the processor processes the data and/or the information to perform the method according to any one of claims 1 to 13, or the method according to any one of claims 14 to 18, or the method according to any one of claims 19 to 23, or the method according to any one of claims 24 to 26, or the method according to claim 27 or 28, or the method according to any one of claims 29 to 31.

35. A computer-readable storage medium, wherein the computer-readable storage medium stores instructions, and when the instructions are run on a computer, the computer is enabled to perform the method according to any one of claims 1 to 13, or the computer is enabled to perform the method according to any one of claims 14 to 18, or the computer is enabled to perform the method according to any one of claims 19 to 23, or the computer is enabled to perform the method according to any one of claims 24 to 26, or the computer is enabled to perform the method according to claim 27 or 28, or the computer is enabled to perform the method according to any one of claims 29 to 31.

36. A computer program product, wherein the computer-readable storage medium stores instructions, and when the instructions are run on a computer, the computer is enabled to perform the method according to any one of claims 1 to 13, or the computer is enabled to perform the method according to any one of claims 14 to 18, or the computer is enabled to perform the method according to any one of claims 19 to 23, or the computer is enabled to perform the method according to any one of claims 24 to 26, or the computer is enabled to perform the method according to claim 27 or 28, or the computer is enabled to perform the method according to any one of claims 29 to 31.

37. A communication system, comprising at least one of a first network device, a terminal device, a second network device, and a core network device, wherein the first network device is configured to perform the method according to any one of claims 1 to 13 or claim 27 or 28, the terminal device is configured to perform the method according to any one of claims 14 to 18, the first network device is configured to perform the method according to any one of claims 19 to 23 or any one of claims 24 to 26, and the core network device is configured to perform the method according to any one of claims 29 to 31.
